# EUROPEAN PATENT APPLICATION

(11) **EP 4 534 578 A1**
(43) Date of publication of application: **09.04.2025**
(21) Application number: 23201439.9
(22) Date of filing: 03.10.2023
(51) Int. Cl.: C08G 18/38, B05D 7/14, C08G 18/42, C08G 18/80, C08G 18/81, C08L 67/00, C09D 167/00, C09D 175/06

(54) **COMPOSITION**

(71) Applicant: Jotun A/S, 3202 Sandefjord (NO)
(72) Inventor: Johansen Kaada, Camilla, N-3202 Sandefjord (NO)
(74) Representative: Marks & Clerk LLP

(57) **Abstract**

The present invention relates to a two-component powder coating composition comprising:
(i) a first component comprising:
(a) a bifunctional polyester having carboxy and hydroxy functional groups;
(b) optionally, a polyester having carboxy functional groups;
(c) an internally blocked or blocked polyisocyanate curing agent; and
(d) a beta-hydroxy alkyl amide curing agent;
and
(ii) a second component comprising:
(a) a polyester having carboxy functional groups; and
(b) a beta-hydroxy alkyl amide curing agent,
preferably wherein said polyester having carboxy functional groups present in said second component has a higher AV than:
the bifunctional polyester having carboxy and hydroxy functional groups present in the first components; or
if polyester having carboxy functional groups is present in said first component, than the weighted average AV of said polyester having carboxy functional groups and said bifunctional polyester having carboxy and hydroxy functional groups, present in said first component.

## Description

### INTRODUCTION

The present invention relates to a two-component powder coating composition, and to a method of making the composition. The invention also relates to use of the two-component powder coating composition to coat a substrate, and to methods of coating a substrate, in particular a metal substrate. The resulting coating and coated substrate form further aspects of the invention.

### BACKGROUND

The invention belongs in the field of durable powder coatings such as exterior super durable powder coating compositions, and other classes, for architectural purposes.

Powder coatings are often applied on three dimensional substrates, such as extruded profiles, in the construction industry to improve their appearance and weatherability performance. The most popular powder coatings are those with a matt finish. Typically, these have a gloss level of 15-60 GU, and ideally 15-49 GU.

Curing robustness is a key property of a powder coating. Ideally, the coated surface should have a consistent gloss level, regardless of the curing conditions employed and the orientation of the surface during curing. This is referred to as curing robustness. Visual differences in gloss level due to the orientation of the surface during curing and/or from different curing schedules is unsatisfactory, and undesirable, for aesthetic reasons.

Powder coated objects are typically wrapped in plastic after coating and curing to protect the surface prior to their use in construction. However, storage of these plastic wrapped powder coated objects in the sun can lead to very high surface temperatures of the coating. For example, in hot and humid climates, such as in the Middle East and South East Asia, the surface temperature of a dark coating may reach as high as 80 °C. When the surface temperature of the coating exceeds the film Tg (glass transition temperature), the coating will soften. High temperatures, combined with the pressure resulting from stacking of plastic wrapped objects, can cause the plastic wrap to imprint permanent marks on the coating surface. This "film marking" is caused by a flattening of the micro texture that normally creates the lower gloss coating of a two-component composition. This has been observed using scanning electron microscopy and Fouriertransform infrared spectroscopy.

Another challenge faced in hot and humid climates is water absorption in the powder coating, which is sometimes referred to as blanching. Blanching is observed as colour lightening of the coating and can be quantified by measuring the L-value of the exposed area and comparing it to the L-value of a non-exposed area. The severity of blanching can also vary with the colour of the coating, and is typically less visible in lighter colours.

To solve the challenges of film marking and blanching in powder coatings, triglycidyl isocyanurate (TGIC) is commonly used as a curing agent. However, TGIC as a raw material is heavily labelled, and presents a health hazard for powder factory workers and hazards for the environment. The final powder product is also labelled, causing hazards for end users, and there could also be added costs for disposing of scrap powder due to the environmental hazards. TGIC is also a part of the REACH (Registration, Evaluation, Authorisation and Restriction of Chemicals) SVHC (substances of very high concern) list. Organisations like LEED (Leadership in Energy and Environmental Design) are encouraging use of materials outside the SVHC list.

Obviously, by using so called TGIC-free powder coatings, the hazards and labelling of TGIC are avoided. However, the performance of the resulting coating is inferior.

One possible solution to the problems of film marking and blanching, is the use of polyurethane systems. These are polyesters having hydroxyl functional groups cured with isocyanates. The drawbacks of these types of coatings include the need for high amounts of isocyanate curing agents, as well as an increased cost level.

Another TGIC-free technology is carboxylated polyesters cured with HAA (β-hydroxy alkyl amide). For such coatings EPDs (environmental product declarations) can be obtained, which can contribute to e.g. LEED points. Another inherent benefit of HAA powder coatings is a higher powder Tg (glass transition temperature) compared to TGIC and polyurethane powder coatings. HAA powder coatings are therefore generally more stable during storage in hot and humid climates, with less formation of lumps and prereaction of the coating prior to application and curing, which otherwise causes difficulties during spray application. Several powder manufacturers offer HAA type TGIC-free powder coatings. However, blanching and resistance to film marking, is inferior with these types of coatings compared to TGIC containing coatings.

### SUMMARY OF INVENTION

The present invention relates to a two-component powder coating composition comprising:
(i) a first component comprising:
   (a) a bifunctional polyester having carboxy and hydroxy functional groups;
   (b) optionally, a polyester having carboxy functional groups;
   (c) an internally blocked or blocked polyisocyanate curing agent; and
   (d) a beta-hydroxy alkyl amide curing agent;
      and
(ii) a second component comprising:
   (a) a polyester having carboxy functional groups; and
   (b) a beta-hydroxy alkyl amide curing agent,
preferably wherein said polyester having carboxy functional groups present in said second component has a higher AV than:
the bifunctional polyester having carboxy and hydroxy functional groups present in the first component; or
if polyester having carboxy functional groups is present in said first component, than the weighted average AV of said polyester having carboxy functional groups and said bifunctional polyester having carboxy and hydroxy functional groups, present in said first component.

The present invention also relates to a method of making a two-component powder coating composition as hereinbefore described comprising:
(i) preparing a first component by mixing:
   (a) a bifunctional polyester having carboxy and hydroxy functional groups;
   (b) optionally, a polyester having carboxy functional groups;
   (c) an internally blocked or blocked polyisocyanate curing agent; and
   (d) a beta-hydroxyalkylamide curing agent;
(ii) preparing a second component by mixing:
   (a) a polyester having carboxy functional groups; and
   (b) a beta-hydroxyalkylamide curing agent; and
(iii) blending said first and second components.

The present invention also relates to the use of a composition as hereinbefore defined to coat at least one surface of a substrate, in particular a metal substrate.

The present invention also relates to a kit for preparing a powder coating composition as hereinbefore defined comprising:
(i) a first container containing a first component comprising:
   (a) a bifunctional polyester having carboxy and hydroxy functional groups;
   (b) optionally, a polyester having carboxy functional groups;
   (c) an internally blocked or blocked polyisocyanate curing agent; and
   (d) a beta-hydroxy alkyl amide curing agent;
      and
(ii) a second container containing a second component comprising:
   (a) a polyester having carboxy functional groups; and
   (b) a beta-hydroxy alkyl amide curing agent,
preferably wherein said polyester having carboxy functional groups present in said second component has a higher AV than:
the bifunctional polyester having carboxy and hydroxy functional groups present in the first component; or
if polyester having carboxy functional groups is present in said first component, than the weighted average AV of said polyester having carboxy functional groups and said bifunctional polyester having carboxy and hydroxy functional groups, present in said first component.

The present invention also relates to a method of coating a substrate, preferably a metal substrate, with a two-component powder coating composition as hereinbefore defined comprising:
applying said coating composition to at least one surface of said substrate; and
curing said composition to produce said coating.

The present invention also relates to a coating, preferably a cured coating, comprising a powder coating composition as hereinbefore defined.

The present invention also relates to a substrate, preferably a metal substrate, coated with a powder coating composition as hereinbefore defined.

The present invention also relates to a composition for preparing a powder coating composition as hereinbefore defined comprising:
(a) a bifunctional polyester having carboxy and hydroxy functional groups;
(b) a polyester having carboxy functional groups;
(c) an internally blocked or blocked polyisocyanate curing agent; and
(d) a beta-hydroxyalkylamide curing agent.

### DEFINTITIONS

As used herein, the term "powder coating composition" refers to dry, free flowing powder which when applied to a surface and heated, e.g. cured, forms a coating thereon. Typically the particles that constitute the powder have an average diameter of 10-120 µm.

As used herein, the term "bifunctional polyester having carboxy and hydroxy functional groups" refers to a polymer comprising ester (-COO-) linker groups and having COOH and OH groups.

As used herein, the term "polyester having carboxy functional groups" refers to a polymer comprising ester (-COO-) linker groups and having COOH groups. This type of polyester does not have OH groups.

As used herein, the term "AV" or "acid number" refers to the number of mg KOH required to neutralize the alkali-reactive groups in 1 g of polymer and has the units (mg KOH/g polymer). The acid number can be determined according to ASTM standard test method D974.

As used herein, the term "weighted average AV" refers to the AV which is calculated from the AV of the bifunctional polyester having carboxy and hydroxy groups multiplied by its wt% plus the AV of the polyester having carboxy functional groups multiplied by its wt%.

As used herein, the term "OHV" or "hydroxy number" refers to the number of milligrams (mg) of KOH equivalent to the hydroxyl groups present in each gram (g) of polymer and has the units (mg KOH/g polymer).

As used herein, the term "binder system" refers to the total combination of binder(s) and curing agent(s). The various polyesters present in the coating composition are binders, also referred to as resins.

As used herein, the term "curing agent" refers to a compound which, when mixed with the binder, produces a cured or hardened coating by generating cross-links within the polymer when heated. Sometimes curing agents are referred to as hardeners.

As used herein, the term "internally blocked polyisocyanate" refers to polyisocyanate curing agent wherein the reactive groups are rendered inert through formation of an uretdione ring, which is cleaved upon heating.

As used herein, the term "blocked polyisocynate" refers to polyisocyanate curing agent which is rendered inert through use of ε-caprolactam, which is released upon heating.

As used herein, the term "degassing agent" refers to a compound that is added to a composition to remove gases, e.g. air, water vapour, and/or promote dissolution of gases so as to avoid the formation of pinholes and bubbles in the coating once formed.

As used herein, the term "flow additive" or "flow agent" refers to a compound that is added to powder coating composition to reduce surface tension and reduce surface imperfections, e.g. craters, pinholes and fish eyes, and increase the surface smoothness.

As used herein, the term "colour pigment" is a pigment that is added to a composition to give colour. Colour pigments include white pigments, such as TiO₂.

As used herein, the term "filler" refers to solid particles. Typically, fillers are incorporated into powder coating compositions to increase their volume. Sometimes fillers are referred to as "extenders".

As used herein, the term "matting agent" refers to a compound that is added to a powder coating composition to reduce its gloss level.

As used herein the term "average diameter" refers to the Z-average diameter size as determined by ISO 22412:2017 using e.g. a Malvern Mastersizer 3000.

As used herein the term D₅₀ refers to the size at which 50% of the particles have a diameter smaller than the value recited.

### DETAILED DESCRIPTION OF INVENTION

The present invention relates to a two-component powder coating composition comprising:
(i) a first component comprising:
   (a) a bifunctional polyester having carboxy and hydroxy functional groups;
   (b) optionally, a polyester having carboxy functional groups;
   (c) an internally blocked or blocked polyisocyanate curing agent; and
   (d) a beta-hydroxy alkyl amide curing agent;
      and
(ii) a second component comprising:
   (a) a polyester having carboxy functional groups; and
   (b) a beta-hydroxy alkyl amide curing agent,
preferably wherein said polyester having carboxy functional groups present in said second component has a higher AV than:
the bifunctional polyester having carboxy and hydroxy functional groups present in the first component; or
if polyester having carboxy functional groups is present in said first component, than the weighted average AV of said polyester having carboxy functional groups and said bifunctional polyester having carboxy and hydroxy functional groups, present in said first component.

The two-component powder coating composition of the invention is highly advantageous because the resulting coatings have a consistent gloss level regardless of the curing conditions, and orientation of the surface during curing. Advantageously this is achieved at gloss levels that are considered to provide a matt finish, i.e. at a gloss level of 15-60 GU, and preferably 15-49 GU. This performance makes the two-component powder coating composition of the invention ideal for architectural purposes, such as extruded profiles.

The two-component powder coating composition of the invention also produces coatings which are TGIC-free but still have high levels of resistance to film marking as well as resistance to blanching, i.e. water absorption resistance. This is highly beneficial given TGIC is heavily labelled, and is hazardous for both animals and the environment. These properties are, of course, particularly useful in hot and humid climates, where coated structures are more likely to experience film marking and/or blanching due to the challenging storage conditions in extreme temperatures.

Furthermore, the two-component powder coating composition of the invention produces coatings which retain their appearance and performance on exposure to humidity, corrosive conditions, weathering and water. The mechanical performance of the coating is also strong, e.g. it performs well in the Martindale and Buchholz Indentation tests, and sealant adhesion in both dry and wet conditions meets the required standards.

### Definition of first component

The first component of the powder coating composition of the present invention preferably comprises a bifunctional polyester having an AV of 15-38 mg KOH/g, and more preferably 18-34 mg KOH/g.

The first component of the powder coating composition of the present invention preferably comprises a bifunctional polyester having an OHV of 15-53 mg KOH/g, more preferably 15-40 mg KOH/g and still more preferably 18-28 mg KOH/g.

Still more preferably the first component of the powder coating composition of the present invention comprises a bifunctional polyester having an AV of 15-38 mg KOH/g, more preferably 18-34 mg KOH/g and an OHV of 15-53 mg KOH/g, more preferably 15-40 mg KOH/g and still more preferably 18-28 mg KOH/g.

The first component of the powder coating composition of the present invention preferably comprises a bifunctional polyester having a Tg of 60-75 °C, and more preferably 66-75 °C.

Preferably the first component of the powder coating composition of the present invention comprises a bifunctional polyester which is amorphous. The bifunctional polyesters present in the first component of the powder coating composition are generally considered as saturated and amorphous resins.

Suitable bifunctional polyester having carboxy and hydroxy functional groups can be prepared according to procedures known in the art. By way of example CN 109293905 and US6599992 describe methods for preparing bifunctional polyester resins.

The first component of the powder coating composition of the present invention preferably comprises a polyester having carboxy functional groups. Preferably the polyester having carboxy groups is substantially free, e.g. free, of hydroxy groups. It is, however, possible that low levels of OH groups remain in the polymer due to the synthesis of the polymer. Such polymers herein are considered to be substantially free of hydroxy groups. Preferably the polyester having carboxy functional groups has an OHV of less than 5 mg KOH/g, and more preferably less than 4 mg KOH/g, e.g. around 3 mg KOH/g, or lower. The first component of the powder coating composition of the present invention preferably comprises a polyester having carboxy functional groups having an AV of 15-39 mg KOH/g, and more preferably 15-25 mg KOH/g.

The first component of the powder coating composition of the present invention preferably comprises a polyester having carboxy functional groups with a Tg of 60-75 °C and more preferably 60-70 °C.

Preferably the first component of the powder coating composition of the present invention comprises a polyester having carboxy functional groups which is amorphous. The polyesters present in the first component of the powder coating composition are generally considered as saturated and amorphous resins.

Suitable polyester having carboxy functional groups for use in the first component are available commercially. Representative examples of suitable polyester having carboxy functional groups include Uralac P 883 from Covestro AG, Reafree 5401 from Arkema and UniQ-Clad 9719-92 T from Polimer Ar Ge Plastik Sanayi Ve Ticaret A.S. These polyesters, when used in the composition of the present invention, have the properties necessary to contribute to powder coating compositions having excellent film marking and blanching properties as well as curing robustness.

Suitable polyesters can also be prepared as commonly known in the art.

In a preferred first component of the powder coating composition of the present invention the weight ratio of the bifunctional polyester having carboxy and hydroxy functional groups to the polyester having carboxy functional groups is 30:70 to 100:0, preferably 30:70 to 80:20, more preferably 40:60 to 80:20 and yet more preferably 50:50 to 70:30.

The first component of the powder coating composition of the present invention preferably comprises 15-90 wt%, more preferably 16-87 wt% and still most preferred 25-70 wt% bifunctional polyester having carboxy and hydroxy functional groups, based on the total weight of the first component.

The first component of the powder coating composition of the present invention preferably comprises 0-70 wt%, more preferably 0-65 wt% and still most preferred 15-45 wt% polyester having carboxy functional groups, based on the total weight of the first component.

The first component of the powder coating composition of the present invention preferably comprises 35-95 wt%, more preferably 40-95 wt% and still most preferred 50-93 wt% total amount of bifunctional polyester having carboxy and hydroxy functional groups and polyester having carboxy functional groups, based on the total weight of the first component.

The first component of the powder coating composition of the present invention also comprises curing agents. The curing agents react with the above-mentioned polymers (i.e. binders) during curing to form a coating, e.g. a film coating. The curing agent therefore facilitates the provision of a coating composition with an acceptable cure time.

The curing agents present in the first component of the powder coating composition of the present invention comprises an internally blocked or blocked polyisocyanate curing agent and a beta-hydroxy alkyl amide (HAA) curing agent.

The curing agent for the carboxy groups present in the composition is preferably a beta-hydroxy alkyl amide. At elevated temperatures, the HAA curing agent reacts with the carboxy groups of the polyester(s) and creates a crosslinked network in the coating film.

Suitable commercially available β-hydroxy alkyl amides for use in the first component include N,N,N',N'-tetrakis(2-hydroxyethyl)adipamide sold under trade names Primid XL-552 from EMS-Primid, Megamid XL from Megara Resins or HH8080 from Huangshan Huahui Technology Co. Ltd, and N,N,N',N'-tetrakis(2-hydroxypropyl)apidamide sold under trade names Primid QM-1260 from EMS-Primid, or HH8260 from Huangshan Huahui Technology Co. Ltd. Typically, N,N,N',N'-tetrakis(2-hydroxyethyl)adipamide will have an OH value in the range of 620 - 720 mg KOH/g, and N,N,N',N'-tetrakis(2-hydroxypropyl)apidamide will have an OH value in the range of 550 - 600 mg KOH/g.

The curing agent for the hydroxy groups is a polyisocyanate curing agent. At elevated temperatures, the polyisocyanate curing agent reacts with the hydroxy groups of the polyester(s) and creates a crosslinked network in the coating film.

Three main types of polyisocyanates are commonly used in the art: Internally blocked polyisocyanates, also referred to as blocking-free curing agents, blocked polyisocyantes and unblocked polyisocynates. In the first component of the powder coating composition of the present invention, the polyisocyanate curing agent is an internally blocked or blocked polyisocyanate. Unblocked polyisocyanates are undesirable as they are prone to react at lower temperatures and may become partly at least deactivated after the extrusion process.

Suitable internally blocked and blocked polyisocyanate curing agents are available commercially. Representative examples include internally blocked Vestagon EP-BF 1321 from Evonik and Crelan EF 403 from Covestro AG, and blocked polyisocyanate curing agents like Vestagon B1530 from Evonik, ICASON1530 from Icason, and Crelan NW 5 from Covestro AG. Such polyisocyanate curing agents typically have equivalent weights in the range of 270 - 340.

It will be appreciated that the curing agents and the polyesters need to react in order to cure the coating. The suitable amounts of curing agents and polyesters depends on the relative numbers of reactive groups, i.e. carboxy/hydroxy groups in polyesters and hydroxy/isocyanate groups in the curing agents. It is preferred if the curing agents are present in the first component in a stoichiometric amount that is 80-120 %, more preferably 90-115 % and still more preferably 95-105 %, based on the number of reactive groups in the curing agents relative to the number of reactive groups present in the polyester resins.

The first component of the powder coating composition of the present invention preferably comprises 1-6 wt%, more preferably 1.4-5 wt% and still more preferably 1.5-3.8 wt % HAA curing agent, based on the total weight of the first component.

The first component of the powder coating composition of the present invention preferably comprises 1-30 wt%, more preferably 1.5-25 wt% and still more preferably 2-12 wt % internally blocked and/or blocked polyisocyanate curing agent, based on the total weight of the first component.

The first component of the powder coating composition of the present invention preferably comprises 1-30 wt%, more preferably 2-20 wt% and still more preferably 4-10 wt % HAA curing agent and internally blocked and/or blocked polyisocyanate curing agent, based on the total weight of the first component.

A preferred first component of the powder coating composition comprises a total amount of binder system, preferably a total amount of bifunctional polyester having carboxy and hydroxy functional groups and polyester having carboxy functions groups as well as curing agents, of 59.5-98.99 wt%, more preferably 70-96 wt% and still more preferably 82-95 wt% based on the total weight of the first component.

### Definition of second component

The second component of the powder coating composition of the present invention comprises a polyester having carboxy functional groups having a higher AV than:
(i) the bifunctional polyester having carboxy and hydroxy functional groups present in the first component; or
(ii) if polyester having carboxy functional groups is present in said first component, than the weighted average AV of said polyester having carboxy functional groups and said bifunctional polyester having carboxy and hydroxy functional groups, present in said first component.

Preferably the second component does not comprise a bifunctional polyester having carboxy and hydroxy functional groups.

When the first component of the powder coating composition of the present invention does not comprise a polyester having carboxy functional groups, the polyester having carboxy functional groups present in said second component preferably has an AV which is higher by at least 11 mg KOH/g than the AV of said bifunctional polyester having carboxy and hydroxy functional groups present in said first component. More preferably the polyester having carboxy functional groups present in the second component has an AV which is higher by 11-65 mg KOH/g, more preferably 11-28 mg KOH/g and still more preferably higher by 11-19 mg KOH/g.

When the first component of the powder coating composition of the present invention does comprise a polyester having carboxy functional groups, the polyester having carboxy functional groups present in said second component preferably has an AV which is higher by at least 11 mg KOH/g than the weighted average AV of said polyester having carboxy groups and said bifunctional polyester having carboxy and hydroxy functional groups, present in said first component. More preferably the polyester having carboxy functional groups present in the second component has an AV which is higher by 11-65 mg KOH/g, more preferably 11-28 mg KOH/g and still more preferably higher by 11-19 mg KOH/g.

When the first component of the powder coating composition of the present invention does comprise a polyester having carboxy functional groups, the polyester having carboxy functional groups present in said second component preferably has an AV which is higher than the AV of said bifunctional polyester having carboxy and hydroxy functional groups present in said first component. When the first component of the powder coating composition of the present invention does comprise a polyester having carboxy functional groups, the polyester having carboxy functional groups present in said second component preferably has an AV which is higher than the AV of said polyester having carboxy functional groups present in said first component. When the first component of the powder coating composition of the present invention does comprise a polyester having carboxy functional groups, the polyester having carboxy functional groups present in said second component preferably has an AV which is higher than the AV of said bifunctional polyester having carboxy and hydroxy functional groups and higher than the AV of said polyester having carboxy functional groups present in said first component.

The second component of the powder coating composition of the present invention preferably comprises a polyester having carboxy functional groups having an AV of 40-80 mg KOH/g, more preferably 40-60 mg KOH/g, and still more preferably 40-50 mg KOH/g.

The second component of the powder coating composition of the present invention preferably comprises a polyester having carboxy functional groups having a Tg of 60-75 °C and more preferably 64-72 °C.

Preferably the second component of the powder coating composition of the present invention comprises a polyester having carboxy functional groups which is amorphous. The polyesters having carboxy functional groups present in the second component of the powder coating composition are generally considered as saturated and amorphous resins.

Suitable polyester having carboxy functional groups for use in the second component are available commercially. Representative examples include Pudralac 2783-AW from Megara resins, Uralac P 6800 from Covestro AG and UniQ-Clad M 9318-10 T Polimer Ar Ge Plastik Sanayi Ve Ticaret A.S. These polyesters, when used in the composition of the present invention, have the properties necessary to contribute to powder coating compositions having excellent film marking and blanching properties as well as curing robustness.

Suitable polyesters can also be prepared as commonly known in the art.

The second component of the powder coating composition of the present invention preferably comprises 50-95 wt%, more preferably 52-95 wt% and still more preferably 55-94 wt % polyester having carboxy functional groups, based on the total weight of the second component.

The second component of the powder coating composition of the present invention preferably comprises curing agent. The curing agent reacts with the above-mentioned polymers (i.e. binders) during curing to form a coating, e.g. a film coating. The curing agent therefore facilitates the provision of a coating composition with an acceptable cure time.

The curing agent present in the second component of the powder coating composition of the present invention preferably comprises a beta-hydroxy alkyl amide (HAA) curing agent. At elevated temperatures, the HAA curing agent reacts with the carboxy groups of the polyester(s) and creates a crosslinked network in the coating film.

Suitable commercially available β-hydroxy alkyl amides for use in the second component include N,N,N',N'-tetrakis(2-hydroxyethyl)adipamide sold under trade names Primid XL-552 from EMS-Primid, Megamid XL from Megara Resins or HH8080 from Huangshan Huahui Technology Co. Ltd, and N,N,N',N'-tetrakis(2-hydroxypropyl)apidamide sold under trade names Primid QM-1260 from EMS-Primid, or HH8260 from Huangshan Huahui Technology Co. Ltd. Typically, N,N,N',N'-tetrakis(2-hydroxyethyl)adipamide will have an OH value in the range of 620 - 720 mg KOH/g, and N,N,N',N'-tetrakis(2-hydroxypropyl)apidamide will have an OH value in the range of 550 - 600 mg KOH/g.

It will be appreciated that the curing agents and the polyesters need to react in order to cure the coating. The suitable amounts of curing agent and polyester depends on the relative numbers of reactive groups, i.e. carboxy groups in polyester and hydroxy groups in the curing agent. It is preferred if the curing agents are present in the second component in a stoichiometric amount that is 80-120 %, more preferably 90-115 % and still more preferably 100-110 %, based on the number of reactive groups in the curing agent relative to the number of reactive groups present in the polyester resin.

The second component of the powder coating composition of the present invention preferably comprises 2-12 wt%, more preferably 3-7 wt% and still more preferably 3.5-6 wt % HAA curing agent, based on the total weight of the second component.

A preferred second component of the powder coating composition comprises a total amount of binder system of 59.5-98.99 wt%, more preferably 70-94 wt% and still more preferably 82-85 wt%, based on the total weight of the second component.

### Ratio/amounts of first and second components

In a preferred powder coating composition of the present invention the weight ratio of said first component to said second component is 70:30 to 20:80, more preferably 70:30 to 30:70, and still more preferably 60:40 to 40:60.

A preferred powder coating composition of the present invention comprises 59.5-98.99 wt%, more preferably 70-94 and still more preferably 82-85 binder system, based on the total weight of the composition.

A preferred powder coating composition of the present invention comprises 2-22 wt%, and more preferably 3.5-11 wt% curing agents, based on the total weight of the composition.

A preferred powder coating composition of the present invention comprises 46-93 wt%, and more preferably 52-93 wt% polyester binders, i.e. all polyesters having carboxy functional groups and bifunctional polyester having carboxy and hydroxy functional groups, based on the total weight of the composition.

A preferred powder coating composition of the present invention comprises 3-61 wt%, more preferably 5-60.5 wt% and still more preferably 5-45 wt% bifunctional polyester having carboxy and hydroxy functional groups, based on the total weight of the composition.

A preferred powder coating composition of the present invention comprises 15-96 wt%, and more preferably 25-88 wt% polyester having carboxy functional groups, based on the total weight of the composition.

A preferred powder coating composition of the present invention comprises 0.2-20 wt%, more preferably 0.3-16 wt% and still more preferably 0.3-8 wt % internally blocked and/or blocked polyisocyanate curing agent, based on the total weight of the composition.

A preferred powder coating composition of the present invention comprises 1-12 wt%, more preferably 2-10 wt% and still more preferably 2-6 wt % HAA curing agent, based on the total weight of the composition.

### Other ingredients - first component

In a preferred powder coating composition of the present invention, said first component does not comprise triglycidyl isocyanurate curing agent. This is highly beneficial because, as mentioned above, this compound is heavily labelled and causes both health and environmental problems. The present invention is advantageous because it provides coatings with low and consistent gloss level, irrespective of the curing conditions or orientation within normal curing conditions, and which have high levels of film marking resistance and water absorption resistance. Usually triglycidyl isocyanurate curing agent is required to provide at least the latter two properties.

### Degassing agent

In a preferred powder coating composition of the present invention the first component comprises a degassing agent. Conventional, commercially available, degassing agents may be used.

Representative examples of suitable degassing agent that may be present in the first component include cyclohexane dimethanol bisbenzoate, benzoin, benzoin derivatives, and mixtures thereof. Preferably the degassing agent is benzoin or a benzoin derivative, and particularly preferably benzoin.

Suitable degassing agents are available from a wide range of commercial suppliers, e.g. benzoin is available under the tradename Miwon benzoin from Miwon Speciality Chemical Co. Ltd, and as Benzoin from Orgamine Chemicals PVT Ltd, and Ningbo South Sea Chemical Co. Ltd.

In a preferred powder coating composition of the present invention the first component comprises 0.10 - 0.50 wt%, more preferably 0.15 - 0.45 wt%, and still more preferably 0.30 - 0.40 wt% degassing agent, based on the total weight of the first component.

### Flow additive

In a preferred powder coating composition of the present invention the first component comprises a flow additive, also known as flow control additive and levelling additive. The presence of a flow additive tends to increase surface smoothness, e.g. by reducing or eliminating surface imperfections such as craters, fish-eyes and pinholes. This is achieved by improving the melt-flow characteristics of the powder coating composition.

Representative examples of suitable flow additives that may be present in the first component include polyacrylates/polyacrylic resins, and silicon containing compounds. A preferred first component of the coating composition of the invention comprise a flow additive, which is a polyacrylic resin absorbed on a silica carrier.

Conventional, commercially available, flow additives may be used, e.g. Reacrone PCL-100N from KSCNT Co. Ltd, Rheoflow PLP 100H(A) from KS Chemical Co. Ltd, Resiflow PV 88 from Worlée-Chemie GmbH and Modaflow Powder 6000 from Allnex USA Inc.

In a preferred powder coating composition of the present invention the first component comprises 0.01 - 3.0 wt%, more preferably 0.5 - 2.0 wt%, and still more preferably 0.90 - 1.50 wt% flow agent, based on the total weight of the first component.

### Colour pigment

In a preferred powder coating composition of the present invention the first component comprises at least one colour pigment. The colour pigment may be inorganic, organic or carbon black colour pigment.

Representative examples of suitable inorganic colour pigments for inclusion in the first component of the coating composition of the present invention include titanium dioxide, pigment blue 28, pigment black 11, pigment brown 24, pigment yellow 42, pigment yellow 119, pigment yellow 184, pigment red 101, pigment green 17, and combinations thereof. The pigments are listed according to their colour index, commonly used in the field. Inorganic effect pigments such as coated aluminium or pearlescent pigments may also be included.

Representative examples of suitable organic pigments for inclusion in the first component of the coating composition of the present invention include pigment blue 15, pigment green 7, pigment green 36, pigment red 122, pigment red 254, pigment yellow 110, pigment yellow 139, and combinations thereof.

Representative examples of suitable carbon black pigments for inclusion in the first component of the coating composition of the present invention include pigment black 7.

Preferred colour pigments for inclusion in the first component of the coating composition of the present invention are selected from inorganic pigment red 101, inorganic pigment yellow 119 and inorganic pigment black 111.

Suitable colour pigments are commercially available, e.g. Bayferrox Red 130 M from LANXESS Deutschland GmbH, COLORTHERM YELLOW 3950 from LANXESS Deutschland GmbH, BAYFERROX BLACK 316 from LANXESS Deutschland GmbH, Tl-PURE R-960 from Chemours International Operations Sarl., IRGAZIN YELLOW L 2060 from BASF AG, Sudafast Green 2730 K from Sudarshan Chemical Industries Ltd. and MONARCH 800 from Cabot Corporation.

Colour pigments are preferably included in the first component of the coating composition in the minimum amount necessary to give the desired colour. The amount of colour pigment required, in part, depends on the type of colour pigment. By way of example, pigment red 101 might be present in 0.5wt%, pigment yellow 119 in 2 wt% and pigment black 111 in 2.3 wt%, based on the weight of the first component. The skilled person will be able to determine suitable amounts for different types of pigments.

When present, the amount of colour pigment present in the first component of the coating composition of the present invention is preferably 0.9-40 wt%, more preferably 5-25 wt%, and still more preferably 10-15 wt%, based on the total weight of the first component.

### Filler

In a preferred powder coating composition of the present invention, the first component comprises a filler.

Preferred fillers present in the first component of the coating composition are inorganic fillers. Commonly used inorganic fillers for weather resistant coating compositions may include feldspar, barium sulphate, wollastonite, nepheline syenite, calcined kaolin, aluminium hydroxide, also referred to as ATH, and mixtures thereof.

Suitable inorganic filler particles exist in different forms, e.g. spherical, lamellar, nodular and irregular. The fillers present in the first component of the coating composition of the present invention preferably have a mean or average particle size, D₅₀, of 0.5 to 25 µm, preferably 1 to 20 µm.

In the first component of the coating composition of the present invention the filler is preferably selected from barium sulphate, preferably natural barium sulphate, nepheline syenite, feldspar, aluminium hydroxide and mixtures thereof and more preferably barium sulphate, preferably natural barium sulphate.

The fillers mentioned above as being suitable for inclusion in the first component are not considered hydrophobic. Preferably the first component of the coating composition of the present invention does not comprise hydrophobic fillers.

The first component of the coating composition of the present invention may comprise a single filler or a combination of two or more fillers. In one preferred first component of the coating composition, a single filler is present. When a single filler is present, the filler is preferably natural barium sulphate. In another preferred first component of the coating composition, combinations of two or more fillers are preferred. Representative examples of some preferred combinations include natural barium sulphate and feldspar, natural barium sulphate and nepheline syenite, and natural barium sulphate and aluminium hydroxide.

Suitable fillers are available commercially. Representative examples of suitable fillers include Blanc Fine GM-80 from Gemme Speciality Chemicals Co. Ltd, BariStar 8825 from Minerals Gerona S.A., Unibrite NB 45 from Sibelco China, Airwhite AW 5 from Yongan Viaton Minerals Co.Ltd, Feldspar PR C-2 from Kaltun Mining Company or Fordagard M10B from LKAB Minerals B.V.

The total amount of filler present in the first component of the coating composition of the present invention is preferably 0-40 wt%, more preferably 5-25 wt%, and still more preferably 5-15 wt% based on the total weight of the first component.

### Matting agent

In a preferred coating composition of the present invention, the first component comprises a matting agent. Conventional, commercially available, matting agents may be used.

Representative examples of suitable matting agent that may be present in the first component include polypropylene wax, polyethylene wax, Fischer-Tropsch wax and mixtures thereof. Preferably the matting agent is polypropylene wax.

Suitable matting agents are available from a wide range of commercial suppliers, e.g. Ceraflour 991 from BYK, Deurex P 3820 M from Deurex and Sasolwax C80N8 from Sasol.

In a preferred powder coating composition of the present invention the first component comprises 0-5 wt%, more preferably 1 - 3 wt%, and still more preferably 1.5 - 2.5 wt% matting agent, based on the total weight of the first component.

The first component of the coating composition of the invention optionally comprises one or more other additives. Examples of other additives that are optionally present in the first component of the composition of the invention include adhesion promoters, waxes, antioxidants, rheology additives, UV/HALS (Hindered Amine Light Stabilizers) additives and surface modifying agents.

Additional additives are preferably present in the first component in an amount of 0-10 wt%, more preferably 1.0 - 8.0 wt%, still more preferably 2.0 - 4.0 wt%, based on the total weight of the first component.

In a preferred powder coating composition of the invention, the first component has a D₅₀ of 15-70 microns, more preferred 25-60 microns, most preferred 30-45 microns.

### Other ingredients - second component

The other ingredients present in the second component may be the same or different to the other ingredients present in the first component. When different, the other ingredients may be different in type and/or amount. Preferably, however, the types of other ingredients present in the first and second components is the same.

In a preferred powder coating composition of the present invention, said second component does not comprise triglycidyl isocyanurate curing agent. This is highly beneficial because, as mentioned above, this compound is heavily labelled and causes both health and environmental problems. The present invention is advantageous because it provides coatings with low and consistent gloss level, irrespective of the curing conditions or orientation within normal curing conditions, and which have high levels of film marking resistance and water absorption resistance. Usually triglycidyl isocyanurate curing agent is required to provide at least the latter two properties.

### Degassing agent

In a preferred powder coating composition of the present invention the second component comprises a degassing agent. Conventional, commercially available, degassing agents may be used.

Representative examples of suitable degassing agent that may be present in the second component include cyclohexane dimethanol bisbenzoate, benzoin, benzoin derivatives, and mixtures thereof. Preferably the degassing agent is benzoin or a benzoin derivative, and particularly preferably benzoin.

Suitable degassing agents are available from a wide range of commercial suppliers, e.g. benzoin is available under the tradename Miwon benzoin from Miwon Speciality Chemical Co. Ltd, and as Benzoin from Orgamine Chemicals PVT Ltd, and Ningbo South Sea Chemical Co. Ltd.

In a preferred powder coating composition of the present invention the second component comprises 0.10 - 0.50 wt%, more preferably 0.15 - 0.45 wt%, and still more preferably 0.30 - 0.40 wt% degassing agent, based on the total weight of the second component.

### Flow additive

In a preferred powder coating composition of the present invention the second component comprises a flow additive, also known as flow control additive and levelling additive. The presence of a flow additive tends to increase surface smoothness, e.g. by reducing or eliminating surface imperfections such as craters, fish-eyes and pinholes. This is achieved by improving the melt-flow characteristics of the powder coating composition.

Representative examples of suitable flow additives that may be present in the second component include polyacrylates/polyacrylic resins, and silicon containing compounds. A preferred second component of the coating composition of the invention comprise a flow additive, which is a polyacrylic resin absorbed on a silica carrier.

Conventional, commercially available, flow additives may be used, e.g. Reacrone PCL-100N from KSCNT Co. Ltd, Rheoflow PLP 100H(A) from KS Chemical Co. Ltd, Resiflow PV 88 from Worlée-Chemie GmbH and Modaflow Powder 6000 from Allnex USA Inc.

In a preferred powder coating composition of the present invention the second component comprises 0.01 - 3.0 wt%, more preferably 0.5 - 2.0 wt%, and still more preferably 0.90 - 1.50 wt% flow agent, based on the total weight of the second component.

### Colour pigment

In a preferred powder coating composition of the present invention the second component comprises at least one colour pigment. The colour pigment may be inorganic, organic or carbon black colour pigment.

Representative examples of suitable inorganic colour pigments for inclusion in the second component of the coating composition of the present invention include titanium dioxide, pigment blue 28, pigment black 11, pigment brown 24, pigment yellow 42, pigment yellow 119, pigment yellow 184, pigment red 101, pigment green 17, and combinations thereof. The pigments are listed according to their colour index, commonly used in the field. Inorganic effect pigments such as coated aluminium or pearlescent pigments may also be included.

Representative examples of suitable organic pigments for inclusion in the second component of the coating composition of the present invention include pigment blue 15, pigment green 7, pigment green 36, pigment red 122, pigment red 254, pigment yellow 110, pigment yellow 139, and combinations thereof.

Representative examples of suitable carbon black pigments for inclusion in the second component of the coating composition of the present invention include pigment black 7.

Preferred colour pigments for inclusion in the second component of the coating composition of the present invention are selected from inorganic pigment red 101, inorganic pigment yellow 119 and inorganic pigment black 111.

Suitable colour pigments are commercially available, e.g. Bayferrox Red 130 M from LANXESS Deutschland GmbH, COLORTHERM YELLOW 3950 from LANXESS Deutschland GmbH, BAYFERROX BLACK 316 from LANXESS Deutschland GmbH, Tl-PURE R-960 from Chemours International Operations Sarl., IRGAZIN YELLOW L 2060 from BASF AG, Sudafast Green 2730 K from Sudarshan Chemical Industries Ltd. And MONARCH 800 from Cabot Corporation.

Colour pigments are preferably included in the second component of the coating composition in the minimum amount necessary to give the desired colour. The amount of colour pigment required, in part, depends on the type of colour pigment. By way of example, pigment red 101 might be present in 0.5 wt%, pigment yellow 119 in 2 wt% and pigment black 111 in 2.3 wt%, based on the weight of the second component. The skilled person will be able to determine suitable amounts for different types of pigments.

When present, the amount of colour pigment present in the second component of the coating composition of the present invention is preferably 0.9-40 wt%, more preferably 5-25 wt%, and still more preferably 10-15 wt%, based on the total weight of the second component.

### Filler

In a preferred powder coating composition of the present invention, the second component comprises a filler.

Preferred fillers present in the second component of the coating composition are inorganic fillers. Commonly used inorganic fillers for weather resistant coating compositions may include feldspar, barium sulphate, wollastonite, nepheline syenite, calcined kaolin, aluminium hydroxide, also referred to as ATH, and mixtures thereof.

Suitable inorganic filler particles exist in different forms, e.g. spherical, lamellar, nodular and irregular. The fillers present in the second component of the coating composition of the present invention preferably have a mean or average particle size, D₅₀, of 0.5 to 25 µm, preferably 1 to 20 µm.

In the second component of the coating composition of the present invention the filler is preferably selected from barium sulphate, preferably natural barium sulphate, nepheline syenite, feldspar, aluminium hydroxide and mixtures thereof and more preferably barium sulphate, preferably natural barium sulphate.

The fillers mentioned above as being suitable for inclusion in the second component are not considered hydrophobic. Preferably the second component of the coating composition of the present invention does not comprise hydrophobic fillers.

The second component of the coating composition of the present invention may comprise a single filler or a combination of two or more fillers. In one preferred second component of the coating composition, a single filler is present. When a single filler is present, the filler is preferably natural barium sulphate. In another preferred second component of the coating composition, combinations of two or more fillers are preferred. Representative examples of some preferred combinations include natural barium sulphate and feldspar, natural barium sulphate and nepheline syenite, and natural barium sulphate and aluminium hydroxide.

Suitable fillers are available commercially. Representative examples of suitable fillers include Blanc Fine GM-80 from Gemme Speciality Chemicals Co. Ltd, BariStar 8825 from Minerals Gerona S.A., Unibrite NB 45 from Sibelco China, Airwhite AW 5 from Yongan Viaton Minerals Co.Ltd, Feldspar PR C-2 from Kaltun Mining Company or Fordagard M10B from LKAB Minerals B.V.

The total amount of filler present in the second component of the coating composition of the present invention is preferably 0-40 wt%, more preferably 5-25 wt%, and still more preferably 5-15 wt% based on the total weight of the second component.

### Matting agent

In a preferred coating composition of the present invention, the second component comprises a matting agent. Conventional, commercially available, matting agents may be used.

Representative examples of suitable matting agent that may be present in the second component include polypropylene wax, polyethylene wax, Fischer-Tropsch wax and mixtures thereof. Preferably the matting agent is polypropylene.

Suitable matting agents are available from a wide range of commercial suppliers, e.g. Ceraflour 991 from BYK, Deurex P 3820 M from Deurex and Sasolwax C80N8 from Sasol.

In a preferred powder coating composition of the present invention the second component comprises 0-5 wt%, more preferably 1 - 3 wt%, and still more preferably 1.5 - 2.5 wt% matting agent, based on the total weight of the second component.

The second component of the coating composition of the invention optionally comprises one or more other additives. Examples of other additives that are optionally present in the second component of the composition of the invention include adhesion promoters, waxes, antioxidants, rheology additives, UV/HALS additives and surface modifying agents.

Additional additives are preferably present in the second component in an amount of 0 - 10 wt%, more preferably 1.0 - 8.0 wt%, still more preferably 2.0 - 4.0 wt%, based on the total weight of the second component.

In a preferred powder coating composition of the invention, the second component has a D₅₀ of 15-70 microns, more preferred 25-60 microns, most preferred 30-45 microns.

### Two-component coating composition

The total amount of degassing agent present in the powder coating composition of the present invention is preferably 0.10-0.50 wt%, more preferably 0.15-0.45 wt% and still more preferably 0.30-0.40 wt%, based on the total weight of the coating composition.

The total amount of flow agent present in the powder coating composition of the present invention is preferably 0.01-3.0 wt%, more preferably 0.5-2.0 wt% and still more preferably 0.90-1.50 wt%, based on the total weight of the composition.

The total amount of filler and colour pigments present in the coating composition of the present invention is preferably 0.9-40 wt%, more preferably 5-25 wt%, and still more preferably 5-15 wt% based on the total weight of the coating composition. If high amounts of colour pigments are used, the filler amount is typically reduced. The filler and colour pigments are normally distributed evenly between the first and second components. However, in some compositions, this distribution may be modified.

The total amount of matting agent present in the powder coating composition of the present invention is preferably 0-5 wt%, more preferably 1-3 wt% and still more preferably 1.5-2.5 wt%, based on the total weight of the coating composition.

The total amount of other additives present in the powder coating composition of the present invention is preferably 0-10 wt%, preferably 1.0-8.0 wt% and more preferably 2.0-4.0 wt% other additives, based on the total weight of the composition.

A preferred powder coating composition of the invention has a D₅₀ of 15-70 microns, more preferred 25-60 microns, most preferred 30-45 microns.

One preferred two-component coating composition of the present invention comprises:
(i) a first component comprising:
   (a) a bifunctional polyester having carboxy and hydroxy functional groups;
   (b) optionally, a polyester having carboxy functional groups;
   (c) an internally blocked or blocked polyisocyanate curing agent; and
   (d) a beta-hydroxy alkyl amide curing agent;
      and
(ii) a second component comprising:
   (a) a polyester having carboxy functional groups; and
   (b) a beta-hydroxy alkyl amide curing agent,
wherein said polyester having carboxy functional groups present in said second component has a higher AV than:
the bifunctional polyester having carboxy and hydroxyl functional groups present in the first component; or
if polyester having carboxy functional groups is present in said first component, than the weighted average AV of said polyester having carboxy functional groups and said bifunctional polyester having carboxy and hydroxy functional groups, present in said first component.

Another preferred two-component coating composition of the present invention comprises:
(i) a first component comprising:
   (a) a bifunctional polyester having carboxy and hydroxy functional groups;
   (b) optionally, a polyester having carboxy functional groups;
   (c) an internally blocked or blocked polyisocyanate curing agent; and
   (d) a beta-hydroxy alkyl amide curing agent;
      and
(ii) a second component comprising:
   (a) a polyester having carboxy functional groups; and
   (b) a beta-hydroxy alkyl amide curing agent,
wherein said polyester having carboxy functional groups present in said second component has an AV which is at least 11 mgKOH/g higher than:
the bifunctional polyester having carboxy and hydroxy functional groups present in the first component; or
if polyester having carboxy functional groups is present in said first component, than the weighted average AV of said polyester having carboxy functional groups and said bifunctional polyester having carboxy and hydroxy functional groups, present in said first component.

Another preferred two-component coating composition of the present invention comprises:
(i) a first component comprising:
   (a) a bifunctional polyester having carboxy and hydroxy functional groups;
   (b) optionally, a polyester having carboxy functional groups;
   (c) an internally blocked or blocked polyisocyanate curing agent;
   (d) a beta-hydroxy alkyl amide curing agent; and
   (e) a degassing agent;
      and
(ii) a second component comprising:
   (a) a polyester having carboxy functional groups;
   (b) a beta-hydroxy alkyl amide curing agent; and
   (c) a degassing agent;
wherein said polyester having carboxy functional groups present in said second component has an AV which is at least 11 mgKOH/g higher than:
the bifunctional polyester having carboxy and hydroxy functional groups present in the first component; or
if polyester having carboxy functional groups is present in said first component, than the weighted average AV of said polyester having carboxy functional groups and said bifunctional polyester having carboxy and hydroxy functional groups, present in said first component.

Another preferred two-component coating composition of the present invention comprises:
(i) a first component comprising:
   (a) a bifunctional polyester having carboxy and hydroxy functional groups, wherein said bifunctional polyester has an acid value of 15-38 mgKOH/g, a hydroxy value of 15-53 mgKOH/g, and a glass transition temperature of 60-75 °C;
   (b) optionally, a polyester having carboxy functional groups wherein said polyester has an acid value of 15-39 mgKOH/g and a glass transition temperature of 60-75 °C;
   (c) an internally blocked or blocked polyisocyanate curing agent;
   (d) a beta-hydroxy alkyl amide curing agent; and
   (e) a degassing agent;
      and
(ii) a second component comprising:
   (a) a polyester having carboxy functional groups wherein said polyester has an acid value of 40-80 mgKOH/g and a glass transition temperature of 60-75 °C;
   (b) a beta-hydroxy alkyl amide curing agent; and
   (c) a degassing agent;
wherein said polyester having carboxy functional groups present in said second component has an AV which is at least 11 mgKOH/g higher than:
the bifunctional polyester having carboxy and hydroxyl functional groups present in the first component; or
if polyester having carboxy functional groups is present in said first component, than the weighted average AV of said polyester having carboxy functional groups and said bifunctional polyester having carboxy and hydroxy functional groups, present in said first component.

Another preferred two-component coating composition of the present invention comprises:
(i) a first component comprising:
   (a) a bifunctional polyester having carboxy and hydroxy functional groups, wherein said bifunctional polyester has an acid value of 15-38 mgKOH/g, a hydroxy value of 15-53 mgKOH/g, and a glass transition temperature of 60-75 °C;
   (b) optionally, a polyester having carboxy functional groups wherein said polyester has an acid value of 15-39 mgKOH/g and a glass transition temperature of 60-75 °C;
   (c) an internally blocked or blocked polyisocyanate curing agent;
   (d) a beta-hydroxy alkyl amide curing agent;
   (e) a degassing agent;
   (f) a flow agent;
   (g) one or more colour pigments; and
   (h) optionally one or more fillers;
      and
(ii) a second component comprising:
   (a) a polyester having carboxy functional groups wherein said polyester has an acid value of 40-80 mgKOH/g and a glass transition temperature of 60-75 °C;
   (b) a beta-hydroxy alkyl amide curing agent;
   (c) a degassing agent;
   (d) a flow agent;
   (e) one or more colour pigments; and
   (f) optionally one or more fillers;
wherein said polyester having carboxy functional groups present in said second component has an AV which is at least 11 mgKOH/g higher than:
the bifunctional polyester having carboxy and hydroxyl functional groups present in the first component; or
if polyester having carboxy functional groups is present in said first component, than the weighted average AV of said polyester having carboxy functional groups and said bifunctional polyester having carboxy and hydroxy functional groups, present in said first component.

Some particularly preferred two-component coating compositions of the present invention are as follows:
First component: carboxy functional polyester (AV 18-22 mgKOH/g, Tg 66 °C) 38.55 wt%, bifunctional polyester (AV 31-34 mgKOH/g, OHV 18-23 mgKOH/g, Tg 70 °C) 38.55 wt%, HAA curing agent (OHV 680 mgKOH/g) 3.09 wt%, NCO curing agent (EW285, Tg 80 °C) 3.91 wt%, flow agent 1.01 wt%, benzoin 0.36 wt%, pigment and fillers 14.53 wt%; and second component: carboxy functional polyester (AV 41-46 mgKOH/g, Tg 68 °C) 79.05 wt%, HAA curing agent (OHV 680 mgKOH/g) 5.05 wt%, flow agent 1.01 wt%, benzoin 0.36 wt%, pigment and fillers 14.53 wt%; where first and second components are dry blended in a 50:50 mixing ratio.

First component: carboxy functional polyester (AV 18-22 mgKOH/g, Tg 66 °C) 38.87 wt%, bifunctional polyester (AV 18-22 mgKOH/g, OHV 18-23 mgKOH/g, Tg 72 °C) 38.87 wt%, HAA curing agent (OHV 680 mgKOH/g) 2.29 wt%, NCO curing agent (EW285, Tg 80 °C) 3.94 wt%, flow agent 1.02 wt%, benzoin 0.36 wt%, pigment and fillers 14.65 wt%; and second component: carboxy functional polyester (AV 41-46 mgKOH/g, Tg 68 °C) 79.05 wt%, HAA curing agent (OHV 680 mgKOH/g) 5.05 wt%, flow agent 1.01 wt%, benzoin 0.36 wt%, pigment and fillers 14.53 wt%; where first and second components are dry blended in a 50:50 mixing ratio.

First component: carboxy functional polyester (AV 18-22 mgKOH/g, Tg 66 °C) 38.61 wt%, bifunctional polyester (AV 18-22 mgKOH/g, OHV 18-23 mgKOH/g, Tg 72 °C) 38.61 wt%, HAA curing agent (OHV 680 mgKOH/g) 2.27 wt%, NCO curing agent (EW 333, Tg 62 °C) 4.58 wt%, flow agent 1.01 wt%, benzoin 0.36 wt%, pigment and fillers 14.56 wt%; and second component: carboxy functional polyester (AV 41-46 mgKOH/g, Tg 68 °C) 79.05 wt%, HAA curing agent (OHV 680 mgKOH/g) 5.05 wt%, flow agent 1.01 wt%, benzoin 0.36 wt%, pigment and fillers 14.53 wt%; where first and second components are dry blended in a 50:50 mixing ratio.

First component: carboxy functional polyester (AV 18-22 mgKOH/g, Tg 66 °C) 38.99 wt%, bifunctional polyester (AV 18-22 mgKOH/g, OHV 18-23 mgKOH/g, Tg 72 °C) 38.99 wt%, HAA curing agent (OHV 680 mgKOH/g) 2.29 wt%, NCO curing agent (EW 275, Tg 64 °C) 3.83 wt%, flow agent 1.01 wt%, benzoin 0.36 wt%, pigment and fillers 14.53 wt%; and second component: carboxy functional polyester (AV 41-46 mgKOH/g, Tg 68 °C) 79.05 wt%, HAA curing agent (OHV 680 mgKOH/g) 5.05 wt%, flow agent 1.01 wt%, benzoin 0.36 wt%, pigment and fillers 14.53 wt%; where first and second components are dry blended in a 50:50 mixing ratio.

First component: carboxy functional polyester (AV 18-22 mgKOH/g, Tg 66 °C) 22.66 wt%, bifunctional polyester (AV 18-22 mgKOH/g, OHV 18-23 mgKOH/g, Tg 72 °C) 52.9 wt%, HAA curing agent (OHV 680 mgKOH/g) 2.27 wt%, NCO curing agent (EW333, Tg 62 °C) 6.27 wt%, flow agent 1.01 wt%, benzoin 0.36 wt%, pigment and fillers 14.53 wt%; and second component: carboxy functional polyester (AV 41-46 mgKOH/g, Tg 68 °C) 79.05 wt%, HAA curing agent (OHV 680 mgKOH/g) 5.05 wt%, flow agent 1.01 wt%, benzoin 0.36 wt%, pigment and fillers 14.53 wt%; where first and second components are dry blended in a 50:50 mixing ratio.

First component: carboxy functional polyester (AV 18-22 mgKOH/g, Tg 66 °C) 38.61 wt%, bifunctional polyester (AV 18-22 mgKOH/g, OHV 18-23 mgKOH/g, Tg 72 °C) 38.61 wt%, HAA curing agent (OHV 680 mgKOH/g) 2.27 wt%, NCO curing agent (EW333, Tg 62 °C) 4.58 wt%, flow agent 1.01 wt%, benzoin 0.36 wt%, pigment and fillers 14.56 wt%; and second component: carboxy functional polyester (AV 41-46 mgKOH/g, Tg 68 °C) 79.05 wt%, HAA curing agent (OHV 680 mgKOH/g) 5.05 wt%, flow agent 1.01 wt%, benzoin 0.36 wt%, pigment and fillers 14.53 wt%; where first and second components are dry blended in a 40:60 mixing ratio.

First component: carboxy functional polyester (AV 18-22 mgKOH/g, Tg 66 °C) 38.61 wt%, bifunctional polyester (AV 18-22 mgKOH/g, OHV 18-23 mgKOH/g, Tg 72 °C) 38.61 wt%, HAA curing agent (OHV 680 mgKOH/g) 2.27 wt%, NCO curing agent (EW333, Tg 62 °C) 4.58 wt%, flow agent 1.01 wt%, benzoin 0.36 wt%, pigment and fillers 14.56 wt%; and second component: carboxy functional polyester (AV 41-46 mgKOH/g, Tg 68 °C) 79.05 wt%, HAA curing agent (OHV 680 mgKOH/g) 5.05 wt%, flow agent 1.01 wt%, benzoin 0.36 wt%, pigment and fillers 14.53 wt%; where first and second components are dry blended in a 60:40 mixing ratio.

First component: carboxy functional polyester (AV 18-22 mgKOH/g, Tg 66 °C) 37.69 wt%, bifunctional polyester (AV 18-22 mgKOH/g, OHV 18-23 mgKOH/g, Tg 72 °C) 37.69 wt%, HAA curing agent (OHV 680 mgKOH/g) 2.23 wt%, NCO curing agent (EW 333, Tg 62 °C) 4.46 wt%, flow agent 0.99 wt%, benzoin 0.35 wt%, pigment and fillers 14.12 wt%, matting agent 2.47 wt%; and second component: carboxy functional polyester (AV 41-46 mgKOH/g, Tg 68 °C) 77.15 wt%, HAA curing agent (OHV 680 mgKOH/g) 4.92 wt%, flow agent 0.99 wt%, benzoin 0.35 wt%, pigment and fillers 14.12 wt%, matting agent 2.47 wt%; where first and second components are dry blended in a 50:50 mixing ratio.

First component: carboxy functional polyester (AV 18-22 mgKOH/g, Tg 66 °C) 61.35 wt%, bifunctional polyester (AV 31-34 mgKOH/g, OHV 18-23 mgKOH/g, Tg 70 °C) 26.23 wt%, HAA curing agent (OHV 680 mgKOH/g) 3.26 wt%, NCO curing agent (EW285, Tg 80 °C) 3.32 wt%, flow agent 0.37 wt%, benzoin 0.13 wt%, pigment and fillers 5.34 wt%; and second component: carboxy functional polyester (AV 41-46 mgKOH/g, Tg 68 °C) 79.05 wt%, HAA curing agent (OHV 680 mgKOH/g) 5.05 wt%, flow agent 1.01 wt%, benzoin 0.36 wt%, pigment and fillers 14.53 wt%; where first and second components are dry blended in a 50:50 mixing ratio.

First component: carboxy functional polyester (AV 18-22 mgKOH/g, Tg 66 °C) 54.8 wt%, bifunctional polyester (AV 31-34 mgKOH/g, OHV 18-23 mgKOH/g, Tg 70 °C) 23.4 wt%, HAA curing agent (OHV 680 mgKOH/g) 2.9 wt%, NCO curing agent (EW 285, Tg 80 °C) 3.0 wt%, flow agent 1.01 wt%, benzoin 0.36 wt%, pigment and fillers 14.53 wt%; and second component: carboxy functional polyester (AV 41-46 mgKOH/g, Tg 68 °C) 79.05 wt%, HAA curing agent (OHV 680 mgKOH/g) 5.05 wt%, flow agent 1.01 wt%, benzoin 0.36 wt%, pigment and fillers 14.53 wt%; where first and second components are dry blended in a 50:50 mixing ratio.

First component: carboxy functional polyester (AV 18-22 mgKOH/g, Tg 66 °C) 37.75 wt%, bifunctional polyester (AV 18-23 mgKOH/g, OHV 32-38 mgKOH/g, Tg 69 °C) 37.75 wt%, HAA curing agent (OHV 680 mgKOH/g) 2.22 wt%, NCO curing agent (EW285, Tg 80 °C) 6.71 wt%, flow agent 1.0 wt%, benzoin 0.35 wt%, pigment and fillers 14.22 wt%; and second component: carboxy functional polyester (AV 41-46 mgKOH/g, Tg 68 °C) 79.05 wt%, HAA curing agent (OHV 680 mgKOH/g) 5.05 wt%, flow agent 1.01 wt%, benzoin 0.36 wt%, pigment and fillers 14.53 wt%; where first and second components are dry blended in a 50:50 mixing ratio.

First component: carboxy functional polyester (AV 32-38 mgKOH/g, Tg 66 °C) 38.22 wt%, bifunctional polyester (AV 18-22 mgKOH/g, OHV 18-23 mgKOH/g, Tg 72 °C) 38.22 wt%, HAA curing agent (OHV 680 mgKOH/g) 3.16 wt%, NCO curing agent (EW 333, Tg 62 °C) 4.5 wt%, flow agent 1.01 wt%, benzoin 0.36 wt%, pigment and fillers 14.53 wt%; and second component: carboxy functional polyester (AV 41-46 mgKOH/g, Tg 68 °C) 79.05 wt%, HAA curing agent (OHV 680 mgKOH/g) 5.05 wt%, flow agent 1.01 wt%, benzoin 0.36 wt%, pigment and fillers 14.53 wt%; where first and second components are dry blended in a 50:50 mixing ratio.

First component: carboxy functional polyester (AV 18-22 mgKOH/g, Tg 66 °C) 36.83 wt%, bifunctional polyester (AV 18-23 mgKOH/g, OHV 46-50 mgKOH/g, Tg 65 °C) 36.83 wt%, HAA curing agent (OHV 680 mgKOH/g) 2.17 wt%, NCO curing agent (EW285, Tg 80 °C) 8.98 wt%, flow agent 0.96 wt%, benzoin 0.34 wt%, pigment and fillers 13.89 wt%; and second component: carboxy functional polyester (AV 41-46 mgKOH/g, Tg 68 °C) 79.05 wt%, HAA curing agent (OHV 680 mgKOH/g) 5.05 wt%, flow agent 1.01 wt%, benzoin 0.36 wt%, pigment and fillers 14.53 wt%; where first and second components are dry blended in a 50:50 mixing ratio.

First component: bifunctional polyester (AV 18-22 mgKOH/g, OHV 18-23 mgKOH/g, Tg 72 °C) 73.25 wt%, HAA curing agent (OHV 680 mgKOH/g) 2.15 wt%, NCO curing agent (EW 333, Tg 62 °C) 8.7 wt%, flow agent 1.01 wt%, benzoin 0.36 wt%, pigment and fillers 14.53 wt%; and second component: carboxy functional polyester (AV 41-46 mgKOH/g, Tg 68 °C) 79.05 wt%, HAA curing agent (OHV 680 mgKOH/g) 5.05 wt%, flow agent 1.01 wt%, benzoin 0.36 wt%, pigment and fillers 14.53 wt%; where first and second components are dry blended in a 50:50 mixing ratio.

First component: carboxy functional polyester (AV 18-22 mgKOH/g, Tg 66 °C) 38.61 wt%, bifunctional polyester (AV 18-22 mgKOH/g, OHV 18-23 mgKOH/g, Tg 72 °C) 38.61 wt%, HAA curing agent (OHV 680 mgKOH/g) 2.27 wt%, NCO curing agent (EW333, Tg 62 °C) 4.58 wt%, flow agent 1.01 wt%, benzoin 0.36 wt%, pigment and fillers 14.56 wt%; and second component: carboxy functional polyester (AV 41-46 mgKOH/g, Tg 68 °C) 79.05 wt%, HAA curing agent (OHV 680 mgKOH/g) 5.05 wt%, flow agent 1.01 wt%, benzoin 0.36 wt%, pigment and fillers 14.53 wt%; where first and second components are dry blended in a 70:30 mixing ratio.

First component: carboxy functional polyester (AV 18-22 mgKOH/g, Tg 66 °C) 38.61 wt%, bifunctional polyester (AV 18-22 mgKOH/g, OHV 18-23 mgKOH/g, Tg 72 °C) 38.61 wt%, HAA curing agent (OHV 680 mgKOH/g) 2.27 wt%, NCO curing agent (EW333, Tg 62 °C) 4.58 wt%, flow agent 1.01 wt%, benzoin 0.36 wt%, pigment and fillers 14.56 wt%; and second component: carboxy functional polyester (AV 41-46 mgKOH/g, Tg 68 °C) 79.05 wt%, HAA curing agent (OHV 680 mgKOH/g) 5.05 wt%, flow agent 1.01 wt%, benzoin 0.36 wt%, pigment and fillers 14.53 wt%; where first and second components are dry blended in a 30:70 mixing ratio.

First component: carboxy functional polyester (AV 18-22 mgKOH/g, Tg 66 °C) 38.61 wt%, bifunctional polyester (AV 18-22 mgKOH/g, OHV 18-23 mgKOH/g, Tg 72 °C) 38.61 wt%, HAA curing agent (OHV 680 mgKOH/g) 2.27 wt%, NCO curing agent (EW333, Tg 62 °C) 4.58 wt%, flow agent 1.01 wt%, benzoin 0.36 wt%, pigment and fillers 14.56 wt%; and second component: carboxy functional polyester (AV 41-46 mgKOH/g, Tg 68 °C) 79.05 wt%, HAA curing agent (OHV 680 mgKOH/g) 5.05 wt%, flow agent 1.01 wt%, benzoin 0.36 wt%, pigment and fillers 14.53 wt%; where first and second components are dry blended in a 20:80 mixing ratio.

### Containers and kits

The present invention also relates to a container containing a powder coating composition as hereinbefore described. Suitable containers include cardboard boxes, plastic bags, cans and drums.

Alternatively the powder coating composition of the present invention may be provided in the form of a kit. A kit for preparing a powder coating composition as hereinbefore described comprises:
(i) a first container containing a first component comprising:
   (a) a bifunctional polyester having carboxy and hydroxy functional groups;
   (b) optionally, a polyester having carboxy functional groups;
   (c) an internally blocked or blocked polyisocyanate curing agent; and
   (d) a beta-hydroxy alkyl amide curing agent;
      and
(ii) a second container containing a second component comprising:
   (a) a polyester having carboxy functional groups; and
   (b) a beta-hydroxy alkyl amide curing agent,
preferably wherein said polyester having carboxy functional groups present in said second component has a higher AV than:
the bifunctional polyester having carboxy and hydroxy functional groups present in the first component; or
if polyester having carboxy functional groups is present in said first component, than the weighted average AV of said polyester having carboxy functional groups and said bifunctional polyester having carboxy and hydroxy functional groups, present in said first component.

Preferably degassing agent is present in the first and second containers.

Preferably flow additive is present in the first and second containers.

Preferably at least one colour pigment is present in the first and second containers.

Preferably filler is present in the first and second containers.

Optionally, kits further comprise instructions for preparing the two-component power coating composition of the present invention.

### Manufacture

The present invention also relates to a method of making a two-component powder coating composition as hereinbefore described comprising:
(i) preparing a first component by mixing:
   (a) a bifunctional polyester having carboxy and hydroxy functional groups;
   (b) optionally, a polyester having carboxy functional groups;
   (c) an internally blocked or blocked polyisocyanate curing agent; and
   (d) a beta-hydroxyalkylamide curing agent;
(ii) preparing a second component by mixing:
   (a) a polyester having carboxy functional groups; and
   (b) a beta-hydroxyalkylamide curing agent; and
(iii) blending said first and second components.

A preferred method of the invention comprises preparing a first component by mixing, melt dispersing, cooling and optionally grinding. Another preferred method of the invention comprises preparing a second component by mixing, melt dispersing, cooling and optionally grinding. In some preferred methods of the invention, the first and second components are combined prior to grinding and are therefore ground together. In other preferred methods of the invention, the first and second components are combined after grinding.

Traditionally, powder coatings have been made by first weighing and mixing together a mixture of binders and curing agents, and optionally pigments, fillers and additives, to obtain a homogenous premix. The premix is then traditionally melted, mixed and dispersed in a single screw or a twin screw extruder into a homogenous melted mixture. Use of a harder screw configuration may improve the general appearance and flow of the coating, but will not influence properties like resistance to film marking and blanching. The melted mixture is then cooled, tableted and broken. The crushed materials are then traditionally grinded in an impact classifying mill or an air classifying mill to obtain the desired particle size distribution of the powder coating. A free flow additive is traditionally added towards the end of the production process to assist in the milling step and enhance fluidization during the application process.

In the case of two component powder coatings, the two components can be processed fully separately as described above, and then dry blended together in a mixer to obtain the two component mix as one powder. Alternatively, the two components can be produced separately to and including the extrusion step, and then blended and processed together from the grinding step and onwards.

Thus in one preferred method the first and second components are each extruded and grinded separately before blending. In other preferred method, the first and second components are separately extruded and blended prior to grinding.

### First component per se

The composition of the first component forms a further aspect of the present invention. It represents an intermediate in the preparation of the two-component powder coating composition hereinbefore described.

Thus the invention also relates to a composition for preparing a powder coating composition as herein described comprising:
(a) a bifunctional polyester having carboxy and hydroxy functional groups;
(b) a polyester having carboxy functional groups;
(c) an internally blocked or blocked polyisocyanate curing agent; and
(d) a beta-hydroxyalkylamide curing agent.

Preferred fall back positions set out herein in relation to the first component, and to each of its possible ingredients apply to this composition. In particular, the bifunctional polyester having carboxy and hydroxy functional groups is preferably amorphous and/or the polyester having carboxy functional groups is amorphous. Still more preferably both polyesters are amorphous.

### Coatings and applications

The present invention also relates to a method of coating a substrate, preferably a metal substrate, with a two-component powder coating composition as hereinbefore described comprising:
applying said coating composition to at least one surface of said substrate; and
curing said composition to produce said coating.

The powder coating composition of the invention may be applied to a substrate, preferably a metal substrate, by any conventional powder coating method. Spraying, e.g. electrostatically, is preferred. Triboelectric or corona charge electrostatic spray guns may be used. Coating techniques are well known in the art and will be familiar to the skilled person.

To form the final cured powder coating film, the substrate with powder coating sprayed onto is traditionally heated to temperatures above the reaction initiation temperature of the chosen powder coating composition for a time long enough for the coating to form a fully crosslinked network. In other words, once a substrate is coated with the powder coating composition of the invention, the coating is preferably cured. Heat or thermal curing is preferred. The coated substrate may be cured in a conventional convection oven, an IR/convection combination oven, a convection/induction oven or a convection/induction/IR oven. Where heating is used for curing, the curing temperature is preferably in the range 160 to 220°C, e.g. 180 to 200°C. Advantageously the powder coating composition of the invention can be cured in short cycles, e.g. 10 minutes at 200°C.

The powder coating composition is preferably well flowing during the curing process. Advantageously this leads to smooth, even finishes.

The film thickness of the cured coating is typically 20 to 200 microns, preferably 50 to 100 microns and especially 60 to 80 microns.

### Substrate and Articles

The present invention also relates to a coating, preferably a cured coating, comprising a powder coating composition as hereinbefore described. Alternatively viewed the present invention relates to a coating obtainable by spraying and curing a powder coating composition as hereinbefore described.

The powder coating composition of the present invention may be used to form a single layer coating or used on top of a primer to form a top coat. Preferably, however, the powder coating composition of the invention is used to form the top coating layer employed on metal substrate. Preferably therefore the coating is a top coat. Optionally the coating further comprises an underlying primer coat.

The present invention also relates to a substrate, preferably a metal substrate, coated with a powder coating composition or a coating as hereinbefore described. The powder coating composition of the invention may be applied to metal substrates. Representative examples of substrates include e.g. steel, galvanized steel, aluminium. A preferred substrate is a metal substrate. The substrates may ultimately be for interior or exterior use, but many of the advantages of the invention are particularly important when exterior use.

The substrate may be partially or completely coated with the powder composition or coating of the invention. In some cases, for example, only the top surface of the substrate is coated. In other cases all surfaces of the substrate are preferred coated. Preferably the substrate is at least part of a surface of an article.

In addition to overcoming the challenges of film marking resistance, water absorption and curing stability, the present invention also shows strong performance in weathering, corrosion, humidity, surface abrasion, wet and dry adhesion and sealant adhesion tests. These properties make the present invention suitable for architectural purposes, including use in the building component industry. The coatings of the present invention comply with third party industry standards, like for example Qualicoat.

Examples of application areas for the coating composition of the present invention include façade panels, claddings, metal frames, windows, handrails, curtain walls, louvers, roofing and space frames.

The present invention also relates to a method for making a powder coating composition having high curing robustness. The invention further relates to a method for making a powder coating composition having high film marking resistance. The present invention also relates to a method for making a powder coating composition having high blanching resistance.

The invention will now be described with reference to the following non-limiting examples.

### EXAMPLES

### Materials

The polymers and compounds used in the examples were either available commercially or made according to known processes, e.g. as disclosed in US6599992 and/or CN109293905. The polymers and compounds used are summarised in the table below.

**Table A**

| Name | Purpose of ingredient in formulation | Properties |
|---|---|---|
| Polyester 1 | Polyester resin with COOH functional group | AV 18-22, Tg 66. Viscosity 27-57 Pa.s. |
| Polyester 2 | Polyester resin with COOH functional group | AV 41-46, Tg 68. Viscosity 25-65 Pa.s. |
| Polyester 3 | Polyester resin with COOH functional group | AV 26-30, Tg 65. Viscosity 21-41 Pa.s. |
| Polyester 4 | Polyester resin with OH functional group | OHV 28-32, Tg 58. Viscosity 15-45 Pa.s. |
| Polyester 5 | Polyester resin with OH functional group | OHV 220-240, Tg 54. Viscosity 15-45 Pa.s. |
| Polyester 6 | Polyester resin with COOH functional group | AV 32-38, Tg 66. Viscosity @ 165 °C (ICI - DIN 53229) 9-20 Pa.s. |
| Bifunctional 1 | Polyester resin with COOH and OH functional groups (bifunctional) | AV 18-22, OHV 18-23, Tg 72. Viscosity @ 200 °C, 9000-11000 mPa.s. |
| Bifunctional 2 | Polyester resin with COOH and OH functional groups (bifunctional) | AV 32-38, OHV 20-24, Tg 62. Viscosity @ 200 °C, 800-1800 mPa.s. |
| Bifunctional 3 | Polyester resin with COOH and OH functional groups (bifunctional) | AV 31-34, OHV 18-23, Tg 70. Viscosity @ 200 °C, 4200-5200 mPa.s. |
| Bifunctional 4 | Polyester resin with COOH and OH functional groups (bifunctional) | AV 18-22, OHV 18-23, Tg 66. Viscosity @ 200 °C,)6300-7300 mPa.s. |
| Bifunctional 5 | Polyester resin with COOH and OH functional groups (bifunctional) | AV 18-23, OHV 32-38, Tg 69. Viscosity @ 200 °C, 3500-4500 mPa.s. |
| Bifunctional 6 | Polyester resin with COOH and OH functional groups (bifunctional) | AV 18-23, OHV 46-50, Tg 65. Viscosity @ 200 °C, 1200-2200 mPa.s. |
| HAA | HAA curing agent | N,N,N',N'-tetrakis(2-hydroxyethyl)adipamide tetrakis(2-hydroxyethyl). OHV 680. Melting range 120 - 124 °C. |
| Unblocked NCO | NCO curing agent | Unblocked polyisocyanate. NCO content 17.3 +/- 0.3 wt%. Melting range (Kofler bar) 100-115 °C. Tg 72. |
| Internally blocked NCO | NCO curing agent | Internally blocked polyisocyanate. NCO content 14-15.5 wt%. EW 285. Melting range (DIN EN ISO 3146) 110-130 °C. Tg 80. |
| Blocked NCO 1 | NCO curing agent | Blocked polyisocyanate. NCO content approx. 12.7 wt%. EW 333. Tg 62. |
| Blocked NCO 2 | NCO curing agent | Blocked polyisocyanate. NCO content 14.8-15.7 wt%. EW 275. Melting range (DIN 53 736) 62-82 °C. Tg 64. |
| Flow agent | Flow agent | Polaycrylic resin absorbed on silica. Non volatile content, 2h/105 °C (DIN EN ISO 3251) min. 95.0%. |
| Benzoin | Degassing agent | 2-Hydroxy-1,2- diphenyl ethanone. Mp 134-138. Purity min 99.5%. |
| Pigment 1 | Red pigment | Pigment red 101. |
| Pigment 2 | Black pigment | Pigment black 11. |
| Pigment 3 | Yellow pigment | Pigment yellow 119. |
| Filler 1 | Barium sulphate filler | Micronized Natural Barium Sulphate. Median d50 (Malvern Micro) 7.7 µm. Specific gravity (SN/T 0480.1~ 0480.13-95) 4.3 g/cm³). Oil Absorption (ISO 787-5: 1980) 10 g/100g. |
| Filler 2 | Barium sulphate filler | Micronized Natural Barium Sulphate. Median d50 (Sedigraph 5100) 5 µm. Density (ISO 787 / 10) 4.35 g/cm³. Oil Absorption (ISO 787 / 5) 12 g/100g. |
| TGIC | TGIC curing agent | EW <110 (104 used), melting range 90-125 °C. |
| Matting agent | Matting agent | Matting agent. Contains Zinc di(benzothiazol-2-yl) disulphide and benzothiazole-2-thiol. Dropping point (ASTM D3954-15) 109-117 °C. |
| Wax 1 | Matting agent | Polypropylene wax, CAS 9003-07-0. Mp 159 |

### Preparation of Powder Coating Compositions

Powder coating components were separately prepared using the following procedure:
(1) The raw materials were placed into a mixing tank, according to the corresponding weight percentage for pre-mixing, as shown in the Tables below, wherein the amounts of the ingredients are specified in wt% unless otherwise specified. Blending was carried out in the mixing tank in one stage, mixing at 500 rpm for 90 seconds.
(2) A twin-screw extruder was used to melt, mix, disperse and extrude the pre-mixed raw materials uniformly. The temperatures of the extruder zones were 50-100 °C, and the screw speed was controlled at 600 rpm. Either a medium, also referred to as normal, screw configuration or a hard screw configuration of the screws were used. The extruded mixture was then cooled, tableted and broken.
(3) The crushed materials were graded and crushed further by an ICM mill. The intake airflow was set to 2.5 m³/min, the speed dosing airlock was set to 3.5 rpm, and the velocity of the grinding disk was set to 80 m/s. The velocity of the mill classifier was controlled at 10 - 15 m/s to obtain a powder coating with a particle size D₅₀ of 30-50 microns. A free flow additive (Aeroxide Alu C from Evonik, 0.06 wt%) was added in this step.

Two component powder coatings were then prepared in a final step:
(4) For a two component system, the first and the second components were prepared separately according to steps (1) - (3) above. The two separate powders were then dry blended together in the ratios shown in the Tables below.

### Preparation of samples for testing

The powder coating was applied onto pre-treated aluminium panels using a Corona electrostatic spray gun. The panels used were AQT panels from Q-lab of 0.8 mm thickness and dimensions of 4x12 inches or 3x6 inches, and chrome-free Nabutan 310 panels from NABU with panel thickness of 1 mm and dimensions 7x14 cm.

Unless otherwise specified, the coated panels were cured at 200 °C for 10 minutes (object temperature). The dry film thickness, measured according to BS EN ISO 2178, of the coatings was 60 - 80 µm.

### Test methods

- Resistance to film marking on a lab scale is performed by using a Transmatic heat press Mod. THM 28/29. This is a press where the top plate can be heated to certain temperatures, while plastic covered test panels, i.e. coated substrate covered by a plastic to mimic film marking, are placed on a room temperature bottom plate. The top plate can be pressed down onto the plastic covered test panels. The pressure can be adjusted by turning the metal wheel on the back of the apparatus. There should be enough pressure so that the hot plate firmly presses down on the panels, but not so much pressure that the lid becomes difficult to close. The same pressure setting is used when comparing a series of samples. The top plate/lid is closed by using the handle, and the test panel is pressed for 90 seconds. When the time is up, the lid is opened, and the plastic is removed from the test panel. The amount of marking on the test panel is visually examined at various angles in several light sources (sunshine, daylight, indoor light etc.). Note that the temperature of the top plate should be measured at the exact area where the plate will press onto the panel. The plastic film used for testing film marking resistance was Interplast, an LDPE transparent unprinted film for aluminium profile wrapping. The film has a density of 0.925 Gm/cc, film thickness 80 +/- 5 micron, co-efficient of friction (dynamic) 0.10 - 0.30, a tensile strength of MD (machine direction) 32 +/- 4 MPa and TD (transverse direction) 28 +/- 4 MPa, and elongation at break of MD 300 +/- 50 % and TD 600 +/- 50%. The assessment criteria applied were as follows:
   O: >75 °C Excellent
   Θ: >70 - 75 °C Good
   X: =<70 °C Poor
- Gloss: Measured in accordance with ISO 2813 at 60° angle. The assessment criteria applied were as follows:
   Excellent: 15-49 GU
   Good: 50-60 GU
   Poor: >60 GU
- PCI flow: Determined by visual comparison to standard samples supplied by the Powder Coating Institute (PCI). The flow is rated on a scale from 1-10, where 10 is a smooth mirror-like surface and 1 is semi-texture. The assessment criteria applied were as follows:
   Excellent: > 5
   Good: 5
   Poor: < 5
- Blanching (ΔL): Performed in accordance with on GSB AL 631-7 (edition February 2022), test no. 8.1 Resistance to the effects of moisture. The colour is measured with a reflective spectrophotometer according to the "L*a*b" colourspace (CIELAB) system - ISO 7724-3, L being the lightness value of the coating. The assessment criteria applied were as follows:
   Excellent: < 1.7
   Good: 1.7 - 2
   Poor: > 2
- Tg of powder, film and raw materials: The glass transition temperature (Tg) was obtained by Differential Scanning Calorimetry (DSC) measurements. The DSC measurements were performed on a Mettler Toledo DSC 3 STAR System. 10 mg dry material was weighed out in aluminum pans and scans were recorded at a heating and cooling rate of 20 °C/min with an empty pan as reference. For raw material Tg, a preconditioning program heating from 30 °C to 80 °C, and holding for 1 minute at 80 °C, was run first on the sample, followed by a heating program from 30 °C to 100 °C. For powder and film Tg, a preconditioning program heating from 10 °C to 80 °C was run first on the sample, followed by a heating program from 30 °C to 270 °C. The inflection value of the glass transition of this second heating is reported as the Tg of the materials. The assessment criteria for powder Tg applied were as follows:
   Excellent: >= 64.20 °C
   Good: 62.20 - 64.19 °C
   Poor: < 62.20 °C
   The assessment criteria for film Tg applied were as follows:
   Excellent: > 73.80 °C
   Good: 71.00 - 73.80 °C
   Poor: < 71.00 °C
- QUV-B: The procedure is run according to GSB AL 631-7 (edition February 2022), test no 12.1 Accelerated UV-B weathering (313 nm), based on ISO 16474-3. The assessment criteria applied were as follows:
   Excellent: >= 700 h
   Good: 600 - 699 h
   Poor: < 600 h
- Appearance: Evaluated by examining the coated panels at various angles and distances in indoor light. The appearance is rated from 0 to 5, where 0 is excellent and 5 describes a terrible appearance. The assessment criteria applied were as follows:
   O: < 2 Excellent
   Θ: 2 Good
   X: > 2 Poor
- Impact resistance: 2.5 Nm indentation was applied to the reverse side of the coated panel according to ASTM D 2794, followed by an adhesion test using a tape with adhesive strength between 6 N and 10 N per 25 mm width according to Qualicoat Specifications 2023 2.8 Impact test. 0 denotes no loss of adhesion between the coating and the substrate.
   The assessment criteria applied were as follows:
   Excellent: 0
   Poor: > 0
- Erichsen cupping: 5 mm indentation was applied to the reverse side of the coated panel according to ISO 1520, followed by an adhesion test using a tape with adhesive strength between 6 N and 10 N per 25 mm width according to Qualicoat Specifications 2023 2.6 Cupping test. 0 denotes no loss of adhesion between the coating and the substrate.
   The assessment criteria applied were as follows:
   Excellent: 0
   Poor: > 0
- Bend test cylindrical: 5 mm indentation was applied to the reverse side of the coated panel according to ISO 1519, followed by an adhesion test using a tape with adhesive strength between 6 N and 10 N per 25 mm width according to Qualicoat Specifications 2023 2.7 Bend test. 0 denotes no loss of adhesion between the coating and the substrate.
   The assessment criteria applied were as follows:
   Excellent: 0
   Poor: > 0
   In the results tables, impact resistance, Erichsen cupping and bend test cylindrical respectively, are reported under "mechanical adhesion".
- Vertical/horizontal curing: Two coated panels were cured vertically, and two coated panels were cured horizontally. The gloss was measured at three points on each of the four panels. The test results were given as the delta gloss between the average gloss of the vertically cured panels and the horizontally cured panels. The assessment criteria applied were as follows:
   Excellent: =< 3
   Poor: > 3
- Delta gloss low cure/high cure: One coated panel was cured at 180 °C for 15 minutes (object temperature) and one coated panel was cured at 210 °C for 8 minutes (object temperature). The test results were given as the delta gloss between the two panels.
   The assessment criteria applied were as follows:
   Excellent: < 1.5
   Good: 1.5 - 4
   Poor: > 4
- Humidity test: Performed according to ISO 6270-2 and Qualicoat Specifications 2023 2.17 Constant climate condensation water test. The test was run for 1000 hours.
   For blistering, the assessment criteria applied were as follows:
      Excellent: 0
      Good: > 0 - S2 (ISO 4628-2)
      Poor: > S2 (ISO 4628-2)
   For infiltration, the assessment criteria applied were as follows:
      Excellent: 0 mm
      Good: =< 1 mm
      Poor: > 1mm
   In addition, for colour difference, the assessment criteria applied were as follows:
      Excellent: < 1
      Good: 1-3
      Poor: > 3
- Acetic acid salt spray resistance: Performed according to ISO 9227 and Qualicoat Specifications 2023 2.10 Acetic acid salt spray resistance. The test was run for 1000 hours.
   For blistering, the assessment criteria applied were as follows:
      Excellent: 0

      Good: > 0 - S2 (ISO 4628-2)
      Poor: > S2 (ISO 4628-2)
   For infiltration, the assessment criteria applied were as follows:
      Excellent: 0
      Good: > 0 - 16 mm²
      Poor: > 16 mm²
- Boiling water: Performed according to Qualicoat specifications 2023 2.16 Resistance to boiling water, method 1.
   For blistering, the assessment criteria applied were as follows:
      Excellent: 0, no blistering
      Poor: > 0, visible blistering
   For detachment, the assessment criteria applied were as follows:
      Excellent: 0, no detachment
      Poor: > 0, detachment
- Martindale: Performed according to CEN/TS 16611 and Qualicoat Specifications 2023 2.21 Scratch and mar resistance test (Martindale).
   The assessment criteria applied were as follows:
   Excellent: > 60% gloss retention
   Good: 30% - 60% gloss retention
   Poor: < 30% gloss retention
- Buchholz indentation: Performed according to ISO 2815 and Qualicoat Specifications 2023 2.5 Buchholz indentation. The assessment criteria applied were as follows:
   Excellent: > 100
   Good: 80-100
   Poor: < 80
- Water spot test: Performed according to Qualicoat Specifications 2023 2.20 Water spot test.
   The assessment criteria applied were as follows:
   Excellent: < 3
   Good: 3 - 4
   Poor: > 4
- Sealant adhesion: Performed according to GSB AL 631-7 (edition February 2022), test no 9 Adhesion of sealing compounds. In addition, evaluation of 7 days at room temperature was followed by an evaluation of the panel after it was left fully immersed in room temperature water for 7 days.
   The assessment criteria applied were as follows:
   Excellent: Pass, no loss of adhesion
   Poor: Fail, loss of adhesion
- WOM: Performed according to ISO 16474-2 Method A (daylight filters) - Cycle 1 (102 min dry/18 min wet) and Qualicoat Specifications 2023 2.12.1 Accelerated weathering test for classes 1, 1.5 and 2.

For gloss retention, the assessment criteria applied were as follows:
Excellent: > 95% gloss retention
Good: 90-95% gloss retention
Poor: < 90% gloss retention

For colour change, the assessment criteria applied were as follows:
Excellent: < 1
Good: 1-1.5
Poor: > 1.5

In the experiments, a dark brown colour pigmentation was selected, because dark colours reach the highest temperatures outdoors in hot and humid climates. The pigments used in the experiments include Pigment 1, Pigment 2 and Pigment 3, in a ratio of 1 : 4.5 : 4, respectively.

A barium sulphate, such as Filler 1 or Filler 2, was used as the filler. The ratio between pigments and filler was 1 : 2.

Examples and comparative examples are shown in the Tables below.

### Effect of the presence of a bifunctional polyester resin having carboxy and hydroxy functional groups in the first component

**Table 1**

| | E1 | E2 | CE1 | CE2 | CE3 |
|---|---|---|---|---|---|
| **First Component** | | | | | |
| Polyester 1 | 61.35 | 54.8 | 81.58 | 81.58 | 81.58 |
| Bifunctional 3 | 26.23 | 23.4 | | | |
| HAA | 3.26 | 2.9 | 2.52 | 2.52 | 2.52 |
| Internally blocked NCO | 3.32 | 3 | | | |
| Flow agent | 0.37 | 1.01 | 1.01 | 1.01 | 1.01 |
| Benzoin | 0.13 | 0.36 | 0.36 | 0.36 | 0.36 |
| Pigments and filler | 5.34 | 14.53 | 14.53 | 14.53 | 14.53 |
| **Sum Binder** | 94.16 | 84.1 | | | |
| **Total** | 100 | 100 | 100 | 100 | 100 |
| Bifunctional : polyester ratio | 30:70 | 30:70 | 0:100 | 0:100 | 0:100 |

| **Second Component** | | | | | |
|---|---|---|---|---|---|
| Polyester 2 | 79.05 | 79.05 | | 53.98 | 79.05 |
| Bifunctional 2 | | | 72.2 | | |
| Bifunctional 3 | | | | 23.13 | |
| HAA | 5.05 | 5.05 | 3.83 | 4.64 | 5.05 |
| Internally blocked NCO | | | 8.07 | 2.35 | |
| Flow agent | 1.01 | 1.01 | 1.01 | 1.01 | 1.01 |
| Benzoin | 0.36 | 0.36 | 0.36 | 0.36 | 0.36 |
| Pigments and filler | 14.53 | 14.53 | 14.53 | 14.53 | 14.53 |
| Total | 100 | 100 | 100 | 100 | 100 |
| Bifunctional : polyester ratio | 0:100 | 0:100 | 100:0 | 30:70 | 0:100 |
| 1^{st}:2^{nd} component mixing ratio | 50:50 | 50:50 | 50:50 | 50:50 | 50:50 |
| Screw configuration | Normal | Hard | Normal | Normal | Hard |

| **Test results** | | | | | |
|---|---|---|---|---|---|
| Gloss 60° | 43 | 40 | High | 43 | 35 |
| PCI flow | 7 | 7 | NA | 6-7 | 6 |
| Blanching (ΔL) | 1.12 | 1.38 | NA | 2.17 | 1.78 |
| Film marking | ○ | Θ | NA | X | X |
| Powder Tg (°C) | 63.57 | 64.2 | 59.86 | 63.93 | 63.9 |
| Film Tg (°C) | 72.2 | 74.24 | 68.2 | 71 | 71.87 |
| QUV-B | 1050 | 780 | NA | 670 | 745 |
| Appearance | ○ | ○ | NA | ○ | ○ |
| Mechanical adhesion¹) | 0-0-0 | 0-0-0 | NA | 0-0-0 | 0-0-0 |

| | | | | | |
|---|---|---|---|---|---|
| NA: not analysed due to high gloss 60° 1) The mechanical adhesion test results are a combination of impact resistance, Erichsen cupping and bend test cylindrical, respectively. | | | | | |

The results in Table 1 show the importance of the presence of a bifunctional polyester resin having both carboxy and hydroxy functional groups in the first component. Examples 1 and 2 comprise a bifunctional polyester resin in the first component and a polyester resin having carboxy functional groups in the second component. The resulting powder produces films having a desirable gloss level, good performance in film marking resistance and low blanching. The QUV-B performance is also high, and all mechanical tests are passed. The powder and film Tg are also acceptable. Example 1 performs better in the film marking test. This is believed to be due to the lower level of additives, pigments and fillers in this composition compared to Example 2.

In contrast, CE3 is a standard TGIC-free composition, containing a carboxy functionalised polyester cured with HAA in both the first and second components. It lacks a bifunctional polyester resin in the first component. Compared to Examples 1 and 2, CE3 produces a coating that fails the film marking test and which produces a higher ΔL in the blanching test.

CE1 and CE2 also lack a bifunctional polyester resin in the first component. CE1 contains a bifunctional polyester resin in the second component and CE2 contains a bifunctional polyester resin and polyester having carboxy functional groups in the second component. Both CE1 and CE2 comprise a polyester having carboxy groups in the first component. In comparison to Examples 1 and 2, the gloss level of CE1 is unacceptably high and CE2 fails the film marking test and produces a relatively high ΔL in the blanching test.

### Effect of the ratio of bifunctional polyester resin to polyester having carboxy functional groups in the first component

**Table 2**

| | E3 | E4 | E5 |
|---|---|---|---|
| **First Component** | | | |
| Polyester 1 | 38.61 | 22.66 | |
| Bifunctional 1 | 38.61 | 52.9 | 73.25 |
| HAA | 2.27 | 2.27 | 2.15 |
| Blocked NCO 1 | 4.58 | 6.27 | 8.7 |
| Flow agent | 1.01 | 1.01 | 1.01 |
| Benzoin | 0.36 | 0.36 | 0.36 |
| Pigments and filler | 14.56 | 14.53 | 14.53 |
| **Sum Binder** | 84.07 | 84.1 | 84.1 |
| **Total** | 100 | 100 | 100 |
| Bifunctional : polyester ratio | 50:50 | 70:30 | 100:0 |

| **Second Component** | | | |
|---|---|---|---|
| Polyester 2 | 79.05 | 79.05 | 79.05 |
| HAA | 5.05 | 5.05 | 5.05 |
| Flow agent | 1.01 | 1.01 | 1.01 |
| Benzoin | 0.36 | 0.36 | 0.36 |
| Pigments and filler | 14.53 | 14.53 | 14.53 |
| Total | 100 | 100 | 100 |
| Bifunctional : polyester ratio | 0:100 | 0:100 | 0:100 |
| 1^{st}:2^{nd} component mixing ratio | 50:50 | 50:50 | 50:50 |
| Screw configuration | Hard | Hard | Hard |

| **Test results** | | | |
|---|---|---|---|
| Gloss 60° | 46 | 48 | 52 |
| PCI flow | 7 | 6 | 7 |
| Blanching (ΔL) | 0.98 | 1.27 | 0.64 |
| Film marking | ○ | ○ | ○ |
| Powder Tg (°C) | 65.21 | 65.92 | 65.52 |
| Film Tg (°C) | 75.22 | 75.27 | 78.54 |
| QUV-B | 760 | 765 | 705 |
| Appearance | ○ | ○ | ○ |
| Mechanical adhesion | 0-0-0 | 0-0-0 | 0-0-0 |

The compositions in these examples comprise a 50:50, 70:30 or 100:0 ratio by weight of bifunctional polyester resin having carboxy and hydroxy functional groups to polyester resin having carboxy functional groups in the first component. All compositions perform strongly in testing, and achieve a desirable balance of gloss level, resistance to film marking, blanching, and UV as well as mechanical strength. All compositions also achieve acceptable powder and film Tg levels.

### Effect of the type of polyisocyanate curing agent

**Table 3**

| | E6 | E3 | E7 | CE4 | CE5 |
|---|---|---|---|---|---|
| **First Component** | | | | | |
| Polyester 1 | 38.87 | 38.61 | 38.99 | 38.87 | 38.27 |
| Bifunctional 1 | 38.87 | 38.61 | 38.99 | 38.87 | 38.27 |
| HAA | 2.29 | 2.27 | 2.29 | 2.29 | 2.25 |
| Internally blocked NCO | 3.94 | | | | |
| Blocked NCO 1 | | 4.58 | | | |
| Blocked NCO 2 | | | 3.83 | | |
| Unblocked NCO | | | | 3.94 | 5.44 |
| Flow agent | 1.02 | 1.01 | 1.01 | 1.02 | 1.03 |
| Benzoin | 0.36 | 0.36 | 0.36 | 0.36 | 0.36 |
| Pigments and filler | 14.65 | 14.56 | 14.53 | 14.65 | 14.38 |
| **Sum Binder** | 83.97 | 84.07 | 84.1 | | |
| **Total** | 100 | 100 | 100 | 100 | 100 |
| Bifunctional : polyester ratio | 50:50 | 50:50 | 50:50 | 50:50 | 50:50 |

| **Second Component** | | | | | |
|---|---|---|---|---|---|
| Polyester 2 | 79.05 | 79.05 | 79.05 | 79.05 | 79.05 |
| HAA | 5.05 | 5.05 | 5.05 | 5.05 | 5.05 |
| Flow agent | 1.01 | 1.01 | 1.01 | 1.01 | 1.01 |
| Benzoin | 0.36 | 0.36 | 0.36 | 0.36 | 0.36 |
| Pigments and filler | 14.53 | 14.53 | 14.53 | 14.53 | 14.53 |
| Wax 1 | | | | | |
| Total | 100 | 100 | 100 | 100 | 100 |
| Bifunctional : polyester ratio | 0:100 | 0:100 | 0:100 | 0:100 | 0:100 |
| 1^{st}:2^{nd} component mixing ratio | 50:50 | 50:50 | 50:50 | 50:50 | 50:50 |
| Screw configuration | Normal | Hard | Hard | Hard | Hard |

| **Test results** | | | | | |
|---|---|---|---|---|---|
| Gloss 60° | 45 | 46 | 40 | 62 | 70 |
| PCI flow | 6 | 7 | 6-7 | 5 | 2 |
| Blanching (ΔL) | 1.07 | 0.98 | 1.62 | 0.7 | 0.63 |
| Film marking | ○ | ○ | ○ | ○ | ○ |
| Powder Tg (°C) | 64.2 | 65.21 | 65.56 | 66.56 | 66.54 |
| Film Tg (°C) | 73.89 | 75.22 | 75.92 | 76.27 | 76.92 |
| QUV-B | 740 | 760 | 810 | 560 | 450 |
| Appearance | ○ | ○ | ○ | Θ | ○ |
| Mechanical adhesion | 0-0-0 | 0-0-0 | 0-0-0 | 0-0-0 | 0-0-0 |

In this example, all of the compositions comprise a bifunctional polyester resin having carboxy and hydroxy functional groups together with a polyester having carboxy functional groups in a ratio of 50:50 in the first component and a polyester having carboxy functional groups in the second component. The Examples 6, 3 and 7 comprise either an internally blocked or a blocked polyisocyanate curing agent. The results show that these compositions perform strongly in testing. They achieve a desirable balance of gloss level, resistance to film marking, blanching, and UV and mechanical strength. All compositions also achieve acceptable powder and film Tg levels.

In contrast, the comparative examples CE4 and CE5 comprise an unblocked polyisocyanate curing agent. These examples produce coatings that have low PCI flow, poor UV resistance and relatively high gloss.

### Effect of bifunctional polyester resin having carboxy and hydroxy functional groups in the first component

**Table 4**

| | E6 | E8 | CE6 | CE7 |
|---|---|---|---|---|
| **First Component** | | | | |
| Polyester 1 | 38.87 | 37.75 | 49.02 | |
| Bifunctional 1 | 38.87 | | | |
| Bifunctional 5 | | 37.75 | | |
| Polyester 4 | | | 29.46 | 73.00 |
| HAA | 2.29 | 2.22 | 1.49 | |
| Internally blocked NCO | 3.94 | 6.71 | 4.48 | 11.11 |
| Flow agent | 1.02 | 1.00 | 1.00 | 1.00 |
| Benzoin | 0.36 | 0.35 | 0.35 | 0.36 |
| Pigments and filler | 14.65 | 14.22 | 14.20 | 14.53 |
| **Sum Binder** | 83.97 | 84.43 | | |
| **Total** | 100 | 100 | 100 | 100 |
| Bifunctional : polyester ratio | 50:50 | 50:50 | 0:100 | 0:100 |

| **Second Component** | | | | |
|---|---|---|---|---|
| Polyester 2 | 79.05 | 79.05 | 79.05 | |
| Polyester 5 | | | | 38.78 |
| HAA | 5.05 | 5.05 | 5.05 | |
| Internally blocked NCO | | | | 45.33 |
| Flow agent | 1.01 | 1.01 | 1.01 | 1.00 |
| Benzoin | 0.36 | 0.36 | 0.36 | 0.36 |
| Pigments and filler | 14.53 | 14.53 | 14.53 | 14.53 |
| Total | 100 | 100 | 100 | 100 |
| Bifunctional : polyester ratio | 0:100 | 0:100 | 0:100 | 0:100 |
| 1^{st}:2^{nd} component mixing ratio | 50:50 | 50:50 | 50:50 | 50:50 |
| Screw configuration | Normal | Normal | Hard | Hard |

| **Test results** | | | | |
|---|---|---|---|---|
| Gloss 60° | 45 | 50 | 24 | 19 |
| PCI flow | 6 | 6 | 6-7 | 5 |
| Blanching (ΔL) | 1.07 | 1.21 | 2.44 | 0.66 |
| Film marking | ○ | ○ | X | ○ |
| Powder Tg (°C) | 64.2 | 63.84 | 61.21 | 59.92 |
| Film Tg (°C) | 73.89 | 73.81 | 69.52 | 67.57/111.85¹⁾ |
| QUV-B | 740 | 740 | 770 | 360 |
| Appearance | ○ | ○ | ○ | ○ |
| Mechanical adhesion | 0-0-0 | 0-0-0 | 0-0-0 | 0-0-0 |

| | | | | |
|---|---|---|---|---|
| 1) Very different Tg between the two components, the 1st component contributes to the low Tg value, and the 2nd component to the highest one. Measurement showing two Tg values. | | | | |

Examples 6 and 8 comprise a bifunctional resin having carboxy and hydroxy functional groups and polyester having carboxy groups in the first component, as well as polyester with carboxy functional groups in the second component. These compositions showed excellent flow, and produced films with excellent appearance, film marking, blanching, and UV resistance. The powder Tg and film Tg performance was also desirable. The bifunctional polyester present in example 8 has a higher OH value than the bifunctional polyester present in Example 6, and therefore comprises more polyisocyanate than Example 6. The gloss level of Example 8 is slightly higher than that of Example 6.

In contrast to Examples 6 and 8, CE6 does not comprise a bifunctional polyester resin. However, it comprises both polyester with hydroxy functional groups and polyester with carboxy functional groups in the first component, and polyester with carboxy functional groups in the second component. In other words, the difference between examples 6 and 8 and CE6 is that in the first component, the carboxy and hydroxy groups are provided in separate polyesters rather than in a bifunctional polyester. The results show that providing the two functional groups, COOH and OH, separately in the first component, gives very poor performance in resistance to film marking and blanching, as well as a low powder Tg and low film Tg.

CE7 comprises polyester with hydroxy functional groups in both the first and second components. It does not contain bifunctional polyester nor polyester with carboxy functional groups. Curing such a composition requires much higher amounts of polyisocyanate, than needed in the bifunctional coating compositions which also have HAA as curing agent. CE7 comprises 11.11 wt% polyisocyanate in the first component and 45.33 wt% polyisocyanate in the second component. In contrast, Examples 6 and 8 comprise 3.94 wt% and 6.71 wt% polyisocyanate in the first component, respectively, and no polyisocyanate in the second component. Even though the composition of CE7 gives strong film marking and blanching performance, the powder Tg is much lower than that of Examples 6 and 8. The QUV-B performance of CE7 is also inferior to that of Examples 6 and 8.

### Comparison to TGIC-containing composition

**Table 5**

| | E3 | CE8 |
|---|---|---|
| **First Component** | | |
| Polyester 1 | 38.61 | |
| Polyester 3 | | 76.63 |
| Bifunctional 1 | 38.61 | |
| HAA | 2.27 | |
| Blocked NCO 1 | 4.58 | |
| Blocked NCO 2 | | 4.03 |
| TGIC | | 4.03 |
| Flow agent | 1.01 | 0.97 |
| Benzoin | 0.36 | 0.4 |
| Pigments and filler | 14.56 | 13.94 |
| **Sum Binder** | 84.07 | |
| **Total** | 100 | 100 |
| Bifunctional : polyester ratio | 50:50 | 0:100 |

| **Second Component** | | |
|---|---|---|
| Polyester 2 | 79.05 | 75.42 |
| HAA | 5.05 | |
| TGIC | | 6.56 |
| Flow agent | 1.01 | 0.98 |
| Benzoin | 0.36 | 0.41 |
| Pigments and filler | 14.53 | 14.17 |
| Matting agent | | 2.46 |
| Total | 100 | 100 |
| Bifunctional : polyester ratio | 0:100 | 0:100 |
| 1^{st}:2^{nd} component mixing ratio | 50:50 | 50:50 |
| Screw configuration | Hard | Hard |

| **Test results** | | |
|---|---|---|
| Gloss 60° | 46 | 26 |
| PCI flow | 7 | 4 |
| Blanching (ΔL) | 0.98 | 0.45 |
| Film marking | ○ | ○ |
| Powder Tg (°C) | 65.21 | 59.24 |
| Film Tg (°C) | 75.22 | 75.52 |
| QUV-B | 760 | 715 |
| Appearance | ○ | ○ |
| Mechanical adhesion | 0-0-0 | 0-0-0 |

CE8 is a regular polyester TGIC-based composition. Use of TGIC gives excellent film marking and blanching resistance, but in addition to the hazardous properties, there are other significant drawbacks with this composition. The powder Tg is only 59.24 °C, which easily leads to agglomeration of the powder during storage, making it very difficult to spray during spray application. In addition, the PCI flow is not at the level of the regular polyester HAA system (CE3 in Table 1) or Example 3 of the present invention.

Example 3 does not comprise TGIC, yet it retains excellent performance in film marking resistance and blanching resistance. Example 3 also has a powder Tg higher than polyester HAA system CE3, which provides great benefits in storage stability of the powder. In addition, the film Tg of Example 3 is at the same level as TGIC composition (CE8). The benefits of excellent film marking resistance and blanching resistance, combined with a high film Tg and powder Tg, without the use of hazardous TGIC, makes Example 3 ideally suitable as a coating in hot and humid climates.

### Effect of polyester having carboxy groups in second component

**Table 6**

| | E3 | E9 | CE9 |
|---|---|---|---|
| **First Component** | | | |
| Polyester 1 AV 18-22 | 38.61 | | |
| Polyester 6 AV 32-38 | | 38.22 | |
| Bifunctional 1 AV 18-22 | 38.61 | 38.22 | 73.25 |
| HAA | 2.27 | 3.16 | 2.15 |
| Blocked NCO 1 | 4.58 | 4.5 | 8.7 |
| Flow agent | 1.01 | 1.01 | 1.01 |
| Benzoin | 0.36 | 0.36 | 0.36 |
| Pigments and filler | 14.56 | 14.53 | 14.53 |
| **Sum Binder** | 84.07 | 84.1 | |
| **Total** | 100 | 100 | 100 |
| Bifunctional : polyester ratio | 50:50 | 50:50 | 100:0 |

| **Second Component** | | | |
|---|---|---|---|
| Polyester 2 AV 41-46 | 79.05 | 79.05 | |
| HAA | 5.05 | 5.05 | |
| Flow agent | 1.01 | 1.01 | |
| Benzoin | 0.36 | 0.36 | |
| Pigments and filler | 14.53 | 14.53 | |
| Total | 100 | 100 | 0 |
| Bifunctional : polyester ratio | 0:100 | 0:100 | |
| 1^{st}:2^{nd} component mixing ratio | 50:50 | 50:50 | 100:0 |
| Screw configuration | Hard | Hard | Hard |

| **Test results** | | | |
|---|---|---|---|
| Gloss 60° | 46 | 57 | 83 |
| PCI flow | 7 | 6 | 7 |
| Blanching (ΔL) | 0.98 | 1.68 | 0.35 |
| Film marking | ○ | ○ | ○ |
| Powder Tg (°C) | 65.21 | 62.27 | 67.21 |
| Film Tg (°C) | 75.22 | 74.92 | 76.54 |
| QUV-B | 760 | 760 | 820 |
| Appearance | ○ | ○ | ○ |
| Mechanical adhesion | 0-0-0 | 0-0-0 | 0-0-0 |

Examples 3 and 9 are compositions of the present invention comprising a bifunctional polyester having carboxy and hydroxy groups, as well as a polyester resin having carboxy groups, in the first component and a polyester having carboxy functional groups in the second component. The polyester having carboxy functional groups in the first component of example 9 has an AV of 32-38 mgKOH/g, whereas the corresponding polyester in Example 3 has an AV of 18-22 mgKOH/g. By changing the AV of the polyester having carboxy functional groups in the first component, it is possible to adjust the gloss level of the final coating. In Example 9, the AVs of the polyesters having carboxy functional groups in the first and second components are closer than in Example 3, giving a higher gloss in Example 9 compared to Example 3.

CE9 is a one component composition. It comprises a bifunctional polyester, and no polyesters having carboxy functional groups. The gloss is much higher than the desired range.

### Effect of hydroxy value and Tg of the bifunctional polyester

**Table 7**

| | E10 | E6 | E8 | E11 |
|---|---|---|---|---|
| **First Component** | | | | |
| Polyester 1 | 38.55 | 38.87 | 37.75 | 36.83 |
| Bifunctional 1 | | 38.87 | | |
| Bifunctional 3 | 38.55 | | | |
| Bifunctional 5 | | | 37.75 | |
| Bifunctional 6 | | | | 36.83 |
| HAA | 3.09 | 2.29 | 2.22 | 2.17 |
| Internally blocked NCO | 3.91 | 3.94 | 6.71 | 8.98 |
| Flow agent | 1.01 | 1.02 | 1.00 | 0.96 |
| Benzoin | 0.36 | 0.36 | 0.35 | 0.34 |
| Pigments and filler | 14.53 | 14.65 | 14.22 | 13.89 |
| **Sum Binder** | 84.1 | 83.97 | 84.43 | 84.81 |
| **Total** | 100 | 100 | 100 | 100 |
| Bifunctional : polyester ratio | 50:50 | 50:50 | 50:50 | 50:50 |

| **Second Component** | | | | |
|---|---|---|---|---|
| Polyester 2 | 79.05 | 79.05 | 79.05 | 79.05 |
| HAA | 5.05 | 5.05 | 5.05 | 5.05 |
| Flow agent | 1.01 | 1.01 | 1.01 | 1.01 |
| Benzoin | 0.36 | 0.36 | 0.36 | 0.36 |
| Pigments and filler | 14.53 | 14.53 | 14.53 | 14.53 |
| Total | 100 | 100 | 100 | 100 |
| Bifunctional : polyester ratio | 0:100 | 0:100 | 0:100 | 0:100 |
| 1^{st}:2^{nd} component mixing ratio | 50:50 | 50:50 | 50:50 | 50:50 |
| Screw configuration | Normal | Normal | Normal | Normal |

| **Test results** | | | | |
|---|---|---|---|---|
| Gloss 60° | 47 | 45 | 50 | 56 |
| PCI flow | 7 | 6 | 6 | 6-7 |
| Blanching (ΔL) | 1.07 | 1.07 | 1.21 | 1.34 |
| Film marking | ○ | ○ | ○ | Θ |
| Powder Tg (°C) | 65.93 | 64.2 | 63.84 | 62.49 |
| Film Tg (°C) | 74.23 | 73.89 | 73.81 | 73.85 |
| QUV-B | 700 | 740 | 740 | 680 |
| Appearance | ○ | ○ | ○ | ○ |
| Mechanical adhesion | 0-0-0 | 0-0-0 | 0-0-0 | 0-0-0 |

Examples 10, 6, 8 and 11 each comprise a bifunctional polyester having carboxy and hydroxy groups together with a polyester having carboxy functional groups in the first component, and a polyester having carboxy functional groups in the second component. The bifunctional polyesters present in each of the examples is different. All produce desirable powders and coatings.

In example 10 the bifunctional polyester has an AV 31-34 mgKOH/g, OHV 18-23 mgKOH/g and a Tg of 70 °C. This example shows excellent performance in all properties, including gloss level, flow, appearance, blanching, resistance to film marking, powder Tg, film Tg and QUV-B.

In example 6, the bifunctional polyester has an AV 18-22 mgKOH/g, OHV 18-23 mgKOH/g and Tg 72 °C. As with Example 10, Example 6 also shows an excellent performance throughout the different tests.

In example 8 the bifunctional polyester has an AV 18-23 mgKOH/g, OHV 32-38 mgKOH/g and Tg 69 °C. Example 8 also shows excellent performance in the testing, although the gloss level is somewhat higher than that of Examples 10 and 6.

In example 11 the bifunctional polyester has an AV 18-23 mgKOH/g, OHV 46-50 mgKOH/g and Tg 65 °C. The gloss level of Example 11 is higher than Example 8, and film marking resistance is lower than for Examples 10, 6 and 8 but still acceptable.

### Effect of the mixing ratio between the first and second components

**Table 8**

| | E3 | E12 | E13 | E14 | E15 | E16 |
|---|---|---|---|---|---|---|
| **First Component** | | | | | | |
| Polyester 1 | 38.61 | 38.61 | 38.61 | 38.61 | 38.61 | 38.61 |
| Bifunctional 1 | 38.61 | 38.61 | 38.61 | 38.61 | 38.61 | 38.61 |
| HAA | 2.27 | 2.27 | 2.27 | 2.27 | 2.27 | 2.27 |
| Blocked NCO 1 | 4.58 | 4.58 | 4.58 | 4.58 | 4.58 | 4.58 |
| Flow agent | 1.01 | 1.01 | 1.01 | 1.01 | 1.01 | 1.01 |
| Benzoin | 0.36 | 0.36 | 0.36 | 0.36 | 0.36 | 0.36 |
| Pigments and filler | 14.56 | 14.56 | 14.56 | 14.56 | 14.56 | 14.56 |
| **Sum Binder** | 84.07 | 84.07 | 84.07 | 84.07 | 84.07 | 84.07 |
| **Total** | 100 | 100 | 100 | 100 | 100 | 100 |
| Bifunctional : polyester ratio | 50:50 | 50:50 | 50:50 | 50:50 | 50:50 | 50:50 |

| **Second Component** | | | | | | |
|---|---|---|---|---|---|---|
| Polyester 2 | 79.05 | 79.05 | 79.05 | 79.05 | 79.05 | 79.05 |
| HAA | 5.05 | 5.05 | 5.05 | 5.05 | 5.05 | 5.05 |
| Flow agent | 1.01 | 1.01 | 1.01 | 1.01 | 1.01 | 1.01 |
| Benzoin | 0.36 | 0.36 | 0.36 | 0.36 | 0.36 | 0.36 |
| Pigments and filler | 14.53 | 14.53 | 14.53 | 14.53 | 14.53 | 14.53 |
| Total | 100 | 100 | 100 | 100 | 100 | 100 |
| Bifunctional : polyester ratio | 0:100 | 0:100 | 0:100 | 0:100 | 0:100 | 0:100 |
| 1^{st}:2^{nd} component mixing ratio | 50:50 | 40:60 | 60:40 | 70:30 | 30:70 | 20:80 |
| Screw configuration | Hard | Hard | Hard | Hard | Hard | Hard |

| **Test results** | | | | | | |
|---|---|---|---|---|---|---|
| Gloss 60° | 46 | 45 | 47 | 45 | 43 | 52 |
| PCI flow | 7 | 6 | 6-7 | 7 | 7 | 7 |
| Blanching (ΔL) | 0.98 | 1.08 | 1.13 | 0.79 | 0.55 | 0.61 |
| Film marking | ○ | ○ | ○ | Θ | Θ | Θ |
| Powder Tg (°C) | 65.21 | 65.24 | 64.92 | 63.84 | 63.84 | 63.54 |
| Film Tg (°C) | 75.22 | 75.71 | 74.23 | 73.22 | 74.88 | 75.2 |
| QUV-B | 760 | 780 | 810 | 730 | 735 | 745 |
| Appearance | ○ | ○ | ○ | ○ | ○ | ○ |
| Mechanical adhesion | 0-0-0 | 0-0-0 | 0-0-0 | 0-0-0 | 0-0-0 | 0-0-0 |

Examples 3, 12, 13, 14, 15 and 16 all comprise bifunctional polyester and polyester having carboxy functional groups in the first component, and polyester having carboxy functional groups in the second component. The first and second components are mixed together in a 50:50 ratio in Example 3. Example 3 shows excellent product performance throughout the different tests.

In Example 12, the first and second components are mixed in a 40:60 ratio, respectively. Example 12 still maintains excellent performance in all tests, including gloss level, flow, appearance, film marking resistance, blanching, powder Tg, film Tg and QUV-B.

In Example 13, the first and second components are mixed in a 60:40 ratio, respectively. As in Example 12, Example 13 maintains excellent performance in all tests.

In Examples 14 and 15, the first and second components are mixed in a 70:30 and 30:70 ratio, respectively. Both show excellent performance in blanching, flow and appearance. Example 15 has a slightly higher film Tg than Example 14. Both have acceptable performance in resistance to film marking. The gloss level is similar to Examples 3, 12 and 13.

In Example 16, the first and second components are mixed in a 20:80 ratio, respectively. The performance is similar to Example 15, with the exception that the gloss level is higher.

### Curing robustness

The examples and comparative examples in Table 9 comprise various binder systems, including a TGIC-system (CE8), a regular TGIC-free system (CE3), and the examples of the present invention, Examples 2, 3, 7 and 4. Their compositions are as shown in the Tables above.

**Table 9**

| | E2 | E3 | E7 | E4 | CE8 | CE3 |
|---|---|---|---|---|---|---|
| Vertical/horizontal curing | 4.4 | 2.9 | 2.2 | 2.6 | 4.5 | 4.6 |
| Delta gloss low cure/high cure | 3.6 | 0.3 | 0.3 | 1.4 | 5.3 | 4.5 |

The results demonstrate that CE8 and CE3 show larger variations in gloss across curing orientations and curing schedules than the compositions of the present invention. Example 2 contains only 23.4 wt% of bifunctional polyester in the first component, and so the gloss variation in vertical/horizontal curing is closer to the level of the TGIC and HAA binder systems, while the delta gloss in low cure/high cure remains somewhat lower.

Examples 3, 7 and 4 contain 38.61 wt%, 38.99 wt% and 52.9 wt% of the bifunctional polyester in the first component, respectively. The results in table 9 demonstrate that increasing the amount of bifunctional polyester gives great benefits in the curing robustness, and these examples all show excellent gloss stability in vertical/horizontal curing and low cure/high cure.

### Effect of matting agents

One conventional way of lowering the gloss of binder systems made from carboxylated polyester resins cured with HAA is the use of waxes. E17 demonstrates that adding a polypropylene wax to the composition of the present invention, specifically E3, lowers the gloss by 15 gloss units, thereby showing that conventional means of matting HAA polyester binder systems are also applicable to the present invention.

**Table 10**

| | E3 | E17 |
|---|---|---|
| **First Component** | | |
| Polyester 1 | 38.61 | 37.69 |
| Bifunctional 1 | 38.61 | 37.69 |
| HAA | 2.27 | 2.23 |
| Blocked NCO 1 | 4.58 | 4.46 |
| Flow agent | 1.01 | 0.99 |
| Benzoin | 0.36 | 0.35 |
| Pigments and filler | 14.56 | 14.12 |
| Wax 1 | | 2.47 |
| **Sum Binder** | 84.07 | 82.07 |
| **Total** | 100 | 100 |
| Bifunctional : polyester ratio | 50:50 | 50:50 |

| **Second Component** | | |
|---|---|---|
| Polyester 2 | 79.05 | 77.15 |
| HAA | 5.05 | 4.92 |
| Flow agent | 1.01 | 0.99 |
| Benzoin | 0.36 | 0.35 |
| Pigments and filler | 14.53 | 14.12 |
| Wax 1 | | 2.47 |
| Total | 100 | 100 |
| Bifunctional : polyester ratio | 0:100 | 0:100 |
| 1^{st}:2^{nd} component mixing ratio | 50:50 | 50:50 |
| Screw configuration | Normal | Hard |

| **Test results** | | |
|---|---|---|
| Gloss 60° | 46 | 31 |

### Comparison to standard TGIC-free super durable powder composition

Example 3, according to the present invention, and CE3, a standard TGIC-free polyester product, are compared in the Table below according to super durable performance requirements.

**Table 11**

| | | E3 | CE3 |
|---|---|---|---|
| Humidity test | | | |
| | Blistering | 0 | 0 |
| | Infiltration | 0 | 0 |
| | Color difference - ΔE | 0.48 | 2.07 |
| Acetic acid salt spray resistance | | | |
| | Blistering | 0 | 0 |
| | Infiltration | 0 | 0 |
| Boiling water | | | |
| | Detachment | 0 | 0 |
| | Blistering | 0 | 0 |
| Martindale | | 61 | 54 |
| Buchholz Indentation | | 113 | 99 |
| Water spot test | | | |
| | ΔL (CIELAB) | 2.33 | 2.66 |
| | ΔE (CIELAB) | 2.49 | 2.78 |
| Sealant adhesion | | | |
| | Room temp | Pass | Pass |
| | Water | Pass | Pass |
| WOM - Gloss retention | | 98 | 100 |
| WOM - Colour change ΔE (CIELAB) | | 0.6 | 1.4 |

In the humidity test, Example 3 shows significantly better performance in colour retention after exposure. In the Martindale test, Example 3 and CE3 both demonstrate performance above the required 30% gloss retention, but Example 3 shows the best performance. In the Buchholz indentation test, both Example 3 and CE3 demonstrate performance above the required 80, but Example 3 shows the best performance. In the water spot test, Example 3 shows slightly less colour change than CE3. In the WOM test, both Example 3 and CE3 perform well above the required 90% gloss retention, and Example 3 shows less colour change. The other test criteria for humidity, acetic acid salt spray resistance, boiling water and sealant adhesion are also well within required limits.

### Summary

The examples showing the strongest performance overall comprise a bifunctional polyester having carboxy and hydroxy functional groups with an AV of 18-22 mgKOH/g or 31-34 mgKOH/g, OHV 18-23 mgKOH/g and Tg 70 or 72 °C, and also a polyester having carboxy functional groups with an AV of 18-22 mgKOH/g and Tg 66 °C, in the first component. The ratios used are 50:50 or 70:30 bifunctional polyester to polyester having carboxy functional groups. These examples comprise a polyester having carboxy functional groups with AV 41-46 and Tg 68 °C in the second component. Blocked or internally blocked polyisocyanates and HAA are present as curing agents. The ratio between the first and second components are 60:40, 50:50 or 40:60.

To achieve particularly strong performance, it is preferred that the bifunctional polyester having carboxy and hydroxy functional groups has an AV of 18-34 mgKOH/g, OHV 18-28 mgKOH/g and Tg 66-75 °C, and that the polyester having carboxy functional groups of the first component has AV 15-25 mgKOH/g and Tg 60-70 °C, and that the polyester having carboxy functional groups of the second component has AV 40-50 and Tg 64-72 °C. It is preferred that the ratio between the first and second components is 60:40 to 40:60.

## Claims

1. A two-component powder coating composition comprising:
(i) a first component comprising:
(a) a bifunctional polyester having carboxy and hydroxy functional groups;
(b) optionally, a polyester having carboxy functional groups;
(c) an internally blocked or blocked polyisocyanate curing agent; and
(d) a beta-hydroxy alkyl amide curing agent;
and
(ii) a second component comprising:
(a) a polyester having carboxy functional groups; and
(b) a beta-hydroxy alkyl amide curing agent,
preferably wherein said polyester having carboxy functional groups present in said second component has a higher AV than:
the bifunctional polyester having carboxy and hydroxy functional groups present in the first components; or
if polyester having carboxy functional groups is present in said first component, than the weighted average AV of said polyester having carboxy functional groups and said bifunctional polyester having carboxy and hydroxy functional groups, present in said first component.

2. A powder coating composition as claimed in claim 1, wherein said first component comprises a bifunctional polyester having an AV of 15-38 mg KOH/g, and more preferably 18-34 mg KOH/g.

3. A powder coating composition as claimed in any preceding claim, wherein said first component comprises a bifunctional polyester having a Tg of 60-75 °C, and more preferably 66-75 °C.

4. A powder coating composition as claimed in claim 1, wherein said first component comprises a polyester having carboxy functional groups.

5. A powder coating composition as claimed in claim 4, wherein said polyester having carboxy functional groups has an AV of 15-39 mg KOH/g, and more preferably 15-25 mg KOH/g.

6. A powder coating composition as claimed in claim 4 or 5, wherein said polyester having carboxy functional groups has a Tg of 60-75 °C and more preferably 60-70 °C.

7. A powder coating composition as claimed in any preceding claim, wherein said polyester having carboxy functional groups present in said second component has a higher AV than the bifunctional polyester having carboxy and hydroxy functional groups present in the first component, and preferably said polyester having carboxy functional groups present in said second component has an AV which is higher by at least 11 mg KOH/g than the AV of said bifunctional polyester having carboxy and hydroxy functional groups present in said first component.

8. A powder coating composition as claimed in any preceding claim, wherein said first component comprises a bifunctional polyester having carboxy and hydroxy functional groups and a polyester having carboxy functional groups, and said polyester having carboxy functional groups present in said second component has a higher AV than the weighted average AV of said polyester having carboxy groups and said bifunctional polyester having carboxy and hydroxy functional groups, present in said first component, and preferably said polyester having carboxy functional groups present in said second component has an AV which is higher by at least 11 mg KOH/g than the weighted average AV of said polyester having carboxy groups and said bifunctional polyester having carboxy and hydroxy functional groups present in said first component.

9. A powder coating composition as claimed in any preceding claim, wherein said polyester having carboxy functional groups present in said second component has an AV of 40-80 mg KOH/g, more preferably 40-60 mg KOH/g, and still more preferably 40-50 mg KOH/g.

10. A powder coating composition as claimed in any preceding claim, wherein said polyester having carboxy functional groups present in said second component has a Tg of 60-75 °C and more preferably 64-72 °C.

11. A powder coating composition as claimed in any preceding claim, wherein said first and/or second component comprises a degassing agent, a flow additive, a colour pigment, a filler, a matting agent, or mixtures thereof.

12. A method of making a two-component powder coating composition as claimed in any one claims 1-11 comprising:
(i) preparing a first component by mixing:
(a) a bifunctional polyester having carboxy and hydroxy functional groups;
(b) optionally, a polyester having carboxy functional groups;
(c) an internally blocked or blocked polyisocyanate curing agent; and
(d) a beta-hydroxyalkylamide curing agent;
(ii) preparing a second component by mixing:
(a) a polyester having carboxy functional groups; and
(b) a beta-hydroxyalkylamide curing agent; and
(iii) blending said first and second components.

13. A method of coating a substrate, preferably a metal substrate, with a two-component powder coating composition as claimed in any one claims 1-11 comprising:
applying said coating composition to at least one surface of said substrate; and
curing said composition to produce said coating.

14. A coating, preferably a cured coating, comprising a powder coating composition as claimed in any one of claims 1-11.

15. A composition for preparing a powder coating composition as claimed in any one of claims 1-11 comprising:
(a) a bifunctional polyester having carboxy and hydroxy functional groups;
(b) a polyester having carboxy functional groups;
(c) an internally blocked or blocked polyisocyanate curing agent; and
(d) a beta-hydroxyalkylamide curing agent.
